(19) Europäisches Patentamt
European Patent Office
Office européen des brevets

(11) **EP 4 773 601 A1**

(12) **EUROPEAN PATENT APPLICATION**

(43) Date of publication:
08.07.2026 Bulletin 2026/28

(21) Application number: 26173336.4

(22) Date of filing: 21.11.2019

(51) International Patent Classification (IPC):
*H04N 19/105* (2014.01)    *H04N 19/159* (2014.01)
*H04N 19/186* (2014.01)    *H04N 19/176* (2014.01)
*H04N 19/593* (2014.01)

(52) Cooperative Patent Classification (CPC):
H04N 19/105; H04N 19/159; H04N 19/176;
H04N 19/186; H04N 19/593; H04N 19/70

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 21.11.2018 US 201862770736 P

(62) Document number(s) of the earlier application(s) in
accordance with Art. 76 EPC:
19887934.8 / 3 868 099

(71) Applicant: HUAWEI TECHNOLOGIES CO., LTD.
Shenzhen 518129 (CN)

(72) Inventors:
• YANG, Haitao
Shenzhen, Guangdong, 518129 (CN)
• CHEN, Jianle
Santa Clara, California, 95050 (US)
• MA, Xiang
Shenzhen, Guangdong, 518129 (CN)
(74) Representative: Eisenführ Speiser
Patentanwälte Rechtsanwälte PartGmbB
Gollierstraße 4
80339 München (DE)

Remarks:
This application was filed on 20-04-2026 as a
divisional application to the application mentioned
under INID code 62.

(54) **INTRA PREDICTION METHOD AND DEVICE**

(57)    An intra prediction method and apparatus for reconstruction of unavailable reference samples are provided. The method includes obtaining an intra prediction mode of a current block, deriving availability of a reference sample of a component of the current block, substituting unavailable reference samples by using available reference samples, deriving a prediction of the current block based on the intra prediction mode and the substituted reference samples, and reconstructing the current block based on the prediction. The component includes a Cb component or a Cr component. Alternatively, the component includes a Chroma component. Since the method derives availability of the reference sample in each component, it can provide the available information more accurately.

FIG. 10

**Description**

TECHNICAL FIELD

Embodiments of the present invention generally relates to the field of video coding and, more particularly to the field of intra-prediction method and device.

BACKGROUND

The amount of video data needed to depict even a relatively short video can be substantial, which may result in difficulties when the data is to be streamed or otherwise communicated across a communications network with limited bandwidth capacity. Thus, video data is generally compressed before being communicated across modern day telecommunications networks. The size of a video could also be an issue when the video is stored on a storage device because memory resources may be limited. Video compression devices often use software and/or hardware at the source to code the video data prior to transmission or storage, thereby decreasing the quantity of data needed to represent digital video images. The compressed data is then received at the destination by a video decompression device that decodes the video data. With limited network resources and ever increasing demands of higher video quality, improved compression and decompression techniques that improve compression ratio with little to no sacrifice in image quality are desirable.

BRIEF SUMMARY OF THE INVENTION

Embodiments of the present disclosure provide intra prediction apparatuses and methods for encoding and decoding an image. The embodiments of the present disclosure should not be interpreted as limiting to examples elaborated herein.

According to a first aspect of the present disclosure, a method includes obtaining an intra prediction mode of a current block; deriving availability of a reference sample of a component of the current block; substituting unavailable reference samples by using available reference samples; deriving a prediction of the current block based on the intra prediction mode and the substituted reference samples; and reconstructing the current block based on the prediction. In an embodiment, the component includes a Y component, a Cb component or a Cr component. In another embodiment, the component includes a Luma component, or a Chroma component.

Since the first aspect of the present disclosure derives availability of the reference sample in each component, it can provide the available information more accurately.

According to an implementation of the first aspect, all Cb samples in the reconstructed block are marked as available; or all Cr samples in the reconstructed block are marked as available.

Since the implementation of the first aspect stores the available information for each sample in each component, it can provide the available information more accurately in intra prediction process.

According to a second aspect of the present disclosure, a decoder includes processing circuitry configured to perform the steps of the method described above.

According to a third aspect of the present disclosure, an encoder includes processing circuitry configured to perform the steps of the method described above.

According to a fourth aspect of the present disclosure, a computer program product contains a program code when executed by a processor carry out the method described above.

According to a fifth aspect of the present disclosure, a decoder for intra prediction includes one or more processing units and a non-transitory computer-readable storage medium coupled to the one or more processing units and storing program instructions executed by the one or more processing units to carry out the method described above.

According to a sixth aspect of the present disclosure, an encoder for intra prediction includes one or more processing units and a non-transitory computer-readable storage medium coupled to the one or more processing units and storing program instructions executed by the one or more processing units to carry out the method described above.

Embodiments of the present disclosure further provide a decoding device and an encoding device for performing the methods above.

For the purpose of clarity, any one of the foregoing embodiments may be combined with any one or more of the other foregoing embodiments to create a new embodiment within the scope of the present disclosure.

These and other features will be more clearly understood from the following detailed description taken in conjunction with the accompanying drawings and claims.

BRIEF DESCRIPTION OF THE DRAWINGS

For a more complete understanding of this disclosure, reference is now made to the following brief description, taken in connection with the accompanying drawings and detailed description, wherein like reference numerals represent like parts.

FIG. 1A is a block diagram illustrating an example coding system that may implement embodiments of the present disclosure.

FIG. 1B is a block diagram illustrating another example coding system that may implement embodiments of the present disclosure.

FIG. 2 is a block diagram illustrating an example video encoder that may implement embodiments of the present disclosure.

FIG. 3 is a block diagram illustrating an example of a video decoder that may implement embodiments of the present disclosure.

FIG. 4 is a schematic diagram of a network device according to an exemplary embodiment of the present disclosure.

FIG. 5 is a simplified block diagram of an apparatus that may be used as either or both of the source device and the destination device of FIG. 1A according to an exemplary embodiment of the present disclosure.

FIG. 6 is an intra prediction algorithm description of H.265/HEVC that can be utilized in the description of the present disclosure.

FIG. 7 is a graphic diagram illustrating reference samples according to an exemplary embodiment of the present disclosure.

FIG. 8 is a graphic diagram illustrating available and unavailable references samples according to an exemplary embodiment of the present disclosure.

FIG. 9 is a simplified flowchart of deriving a reconstructed signal according to an exemplary embodiment of the present disclosure.

FIG. 10 is a simplified flowchart of deriving a prediction signal according to an exemplary embodiment of the present disclosure.

FIG. 11 is a graphic diagram illustrating samples in a current block that are marked as available according to an exemplary embodiment of the present disclosure.

FIG. 12 is a graphic diagram illustrating samples in a current block that are marked as available in unit N x N according to an exemplary embodiment of the present disclosure.

FIG. 13 is a graphic diagram illustrating samples at the right boundary and bottom boundary of a current block that are marked as available according to an exemplary embodiment of the present disclosure.

FIG. 14 is a graphic diagram illustrating samples at the right boundary and bottom boundary of a current block that are marked as available in unit N according to an exemplary embodiment of the present disclosure.

FIG. 15 is a graphic diagram illustrating samples at the right boundary and bottom boundary of a current block that are marked as available in unit N x N according to an exemplary embodiment of the present disclosure.

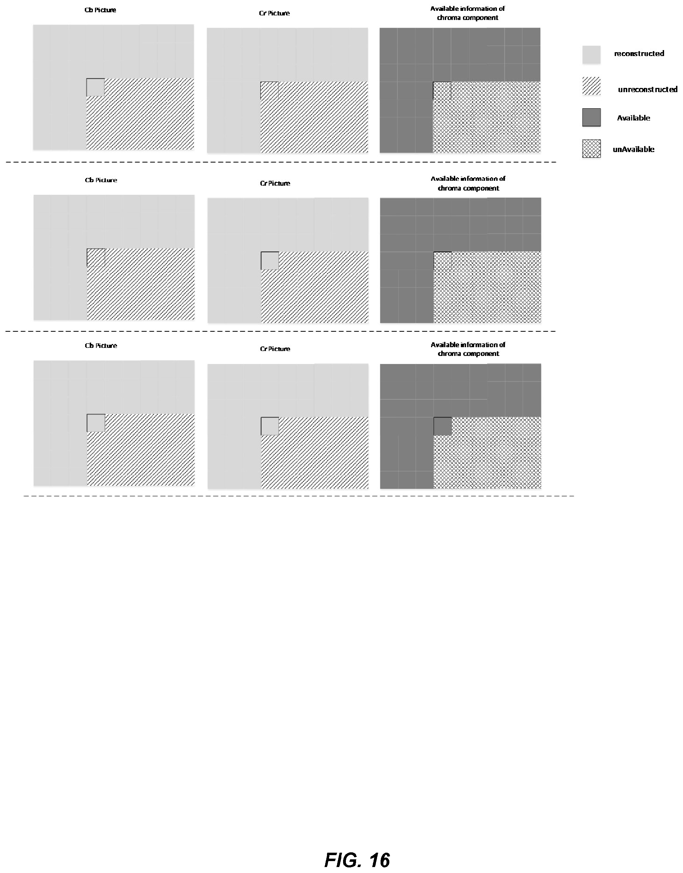

FIG. 16 is a graphic diagram illustrating a marking method of samples of chroma components according to an exemplary embodiment of the present disclosure.

FIG. 17 is a block diagram showing an example structure of a content supply system 3100 which realizes a content delivery service.

FIG. 18 is a block diagram showing a structure of an example of a terminal device.

DETAILED DESCRIPTION OF THE INVENTION

It should be understood at the outset that although an illustrative implementation of one or more embodiments are provided below, the disclosed systems and/or methods may be implemented using a variety of techniques, whether currently known or in existence. The disclosure should in no way be limited to the illustrative implementations, drawings, and techniques illustrated below, including the exemplary designs and implementations illustrated and described herein, but may be modified within the scope of the appended claims along with their full scope of equivalents.

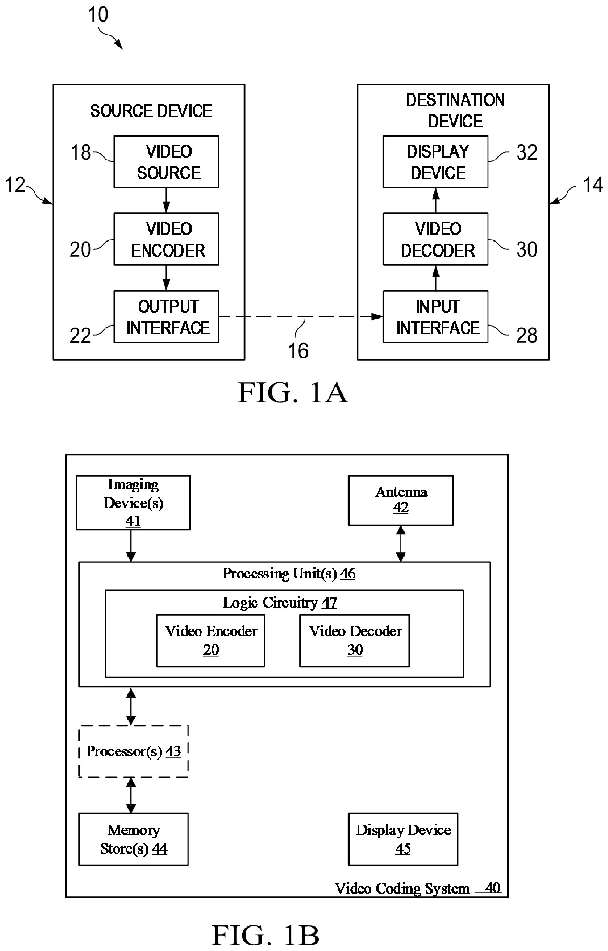

FIG. 1A is a schematic block diagram illustrating an example coding system 10 that may utilize bidirectional prediction techniques. As shown in FIG. 1A, the coding system 10 includes a source device 12 that provides encoded video data to be decoded at a later time by a destination device 14. In particular, the source device 12 may provide the video data to destination device 14 via a computer-readable medium 16. Source device 12 and destination device 14 may comprise any of a wide range of devices, including desktop computers, notebook (i.e., laptop) computers, tablet computers, set-top boxes, telephone handsets such as so-called "smart" phones, so-called "smart" pads, televisions, cameras, display devices, digital media players, video gaming consoles, video streaming device, or the like. In some cases, source device 12 and destination device 14 may be equipped for wireless communication.

Destination device 14 may receive the encoded video data to be decoded via computer-readable medium 16. Computer-readable medium 16 may comprise any type of medium or device capable of moving the encoded video data from source device 12 to destination device 14. In one example, computer-readable medium 16 may comprise a communication medium to enable source device 12 to transmit encoded video data directly to destination device 14 in real-time. The encoded video data may be modulated according to a communication standard, such as a wireless communication protocol, and transmitted to destination device 14. The communication medium may comprise any wireless or wired communication medium, such as a radio frequency (RF) spectrum or one or more physical transmission lines. The communication medium may form part of a packet-based network, such as a local area network, a wide-area network, or a global network such as the Internet. The communication medium may include routers, switches, base stations, or any other equipment that may be useful to facilitate communication from source device 12 to destination device 14.

In some examples, encoded data may be output from output interface 22 to a storage device. Similarly, encoded data may be accessed from the storage device by input interface. The storage device may include any of a variety of distributed or locally accessed data storage media such as a hard drive, Blu-ray discs, digital video disks (DVD)s, Compact Disc Read-Only Memories (CD-ROMs), flash memory, volatile or non-volatile memory, or any other suitable digital storage media for storing encoded video data. In a further example, the storage device may correspond to a file server or another intermediate storage device that may store the encoded video generated by source device 12. Destination device 14 may access stored video data from the storage device via streaming or download. The file server may be any type of server capable of storing encoded video data and transmitting that encoded video data to the destination device 14. Example file servers include a web server (e.g., for a website), a file transfer protocol (FTP) server, network attached storage (NAS) devices, or a local disk drive. Destination device 14 may access the encoded video data through any standard data connection, including an Internet connection. This may include a wireless channel (e.g., a Wi-Fi connection), a wired connection (e.g., digital subscriber line (DSL), cable modem, etc.), or a combination of both that is suitable for accessing encoded video data stored on a file server. The transmission of encoded video data from the storage device may be a streaming transmission, a download transmission, or a combination thereof.

The techniques of this disclosure are not necessarily limited to wireless applications or settings. The techniques may be applied to video coding in support of any of a variety of multimedia applications, such as over-the-air television broadcasts, cable television transmissions, satellite television transmissions, Internet streaming video transmissions, such as dynamic adaptive streaming over HTTP (DASH), digital video that is encoded onto a data storage medium, decoding of digital video stored on a data storage medium, or other applications. In some examples, coding system 10 may be configured to support one-way or two-way video transmission to support applications such as video streaming, video playback, video broadcasting, and/or video telephony.

In the example of FIG. 1A, source device 12 includes video source 18, video encoder 20, and output interface 22. Destination device 14 includes input interface 28, video decoder 30, and display device 32. In accordance with this disclosure, video encoder 200 of source device 12 and/or the video decoder 300 of the destination device 14 may be configured to apply the techniques for bidirectional prediction. In other examples, a source device and a destination device may include other components or arrangements. For example, source device 12 may receive video data from an external video source, such as an external camera. Likewise, destination device 14 may interface with an external display device, rather than including an integrated display device.

The illustrated coding system 10 of FIG. 1A is merely one example. Techniques for bidirectional prediction may be performed by any digital video encoding and/or decoding device. Although the techniques of this disclosure generally are performed by a video coding device, the techniques may also be performed by a video encoder/decoder, typically referred to as a "CODEC." Moreover, the techniques of this disclosure may also be performed by a video preprocessor. The video encoder and/or the decoder may be a graphics processing unit (GPU) or a similar device.

Source device 12 and destination device 14 are merely examples of such coding devices in which source device 12 generates coded video data for transmission to destination device 14. In some examples, source device 12 and destination device 14 may operate in a substantially symmetrical manner such that each of the source and destination devices 12, 14 includes video encoding and decoding components. Hence, coding system 10 may support one-way or two-way video transmission between video devices 12, 14, e.g., for video streaming, video playback, video broadcasting, or video telephony.

Video source 18 of source device 12 may include a video capture device, such as a video camera, a video archive containing previously captured video, and/or a video feed interface to receive video from a video content provider. As a further alternative, video source 18 may generate computer graphics-based data as the source video, or a combination of live video, archived video, and computer-generated video.

In some cases, when video source 18 is a video camera, source device 12 and destination device 14 may form so-called camera phones or video phones. As mentioned above, however, the techniques described in this disclosure may be applicable to video coding in general, and may be applied to wireless and/or wired applications. In each case, the captured, pre-captured, or computer-generated video may be encoded by video encoder 20. The encoded video information may then be output by output interface 22 onto a computer-readable medium 16.

Computer-readable medium 16 may include transient media, such as a wireless broadcast or wired network transmission, or storage media (that is, non-transitory storage media), such as a hard disk, flash drive, compact disc, digital video disc, Blu-ray disc, or other computer-readable media. In some examples, a network server (not shown) may receive encoded video data from source device 12 and provide the encoded video data to destination device 14, e.g., via network transmission. Similarly, a computing device of a medium production facility, such as a disc stamping facility, may receive encoded video data from source device 12 and produce a disc containing the encoded video data. Therefore, computer-readable medium 16 may be understood to include one or more computer-readable media of various forms, in various examples.

Input interface 28 of destination device 14 receives information from computer-readable medium 16. The information of computer-readable medium 16 may include syntax information defined by video encoder 20, which is also used by video decoder 30, that includes syntax elements that describe characteristics and/or processing of blocks and other coded units, e.g., group of pictures (GOPs). Display device 32 displays the decoded video data to a user, and may comprise any of a variety of display devices such as a cathode ray tube (CRT), a liquid crystal display (LCD), a plasma display, an organic light emitting diode (OLED) display, or another type of display device.

Video encoder 200 and video decoder 300 may operate according to a video coding standard, such as the High Efficiency Video Coding (HEVC) standard presently under development, and may conform to the HEVC Test Model (HM). Alternatively, video encoder 200 and video decoder 300 may operate according to other proprietary or industry standards, such as the International Telecommunications Union Telecommunication Standardization Sector (ITU-T) H.264 standard, alternatively referred to as Motion Picture Expert Group (MPEG)-4, Part 10, Advanced Video Coding (AVC), H.265/HEVC, or extensions of such standards. The techniques of this disclosure, however, are not limited to any particular coding standard. Other examples of video coding standards include MPEG-2 and ITU-T H.263. Although not shown in FIG. 1A, in some aspects, video encoder 200 and video decoder 300 may each be integrated with an audio encoder and decoder, and may include appropriate multiplexer-demultiplexer (MUX-DEMUX) units, or other hardware and software, to handle encoding of both audio and video in a common data stream or separate data streams. If applicable, MUX-DEMUX units may conform to the ITU H.223 multiplexer protocol, or other protocols such as the user datagram protocol (UDP).

Video encoder 200 and video decoder 300 each may be implemented as any of a variety of suitable encoder circuitry, such as one or more microprocessors, digital signal processors (DSPs), application specific integrated circuits (ASICs), field programmable gate arrays (FPGAs), discrete logic, software, hardware, firmware or any combinations thereof. When the techniques are implemented partially in software, a device may store instructions for the software in a suitable, non-transitory computer-readable medium and execute the instructions in hardware using one or more processors to perform the techniques of this disclosure. Each of video encoder 200 and video decoder 300 may be included in one or more encoders or decoders, either of which may be integrated as part of a combined encoder/decoder (CODEC) in a respective device. A device including video encoder 200 and/or video decoder 300 may comprise an integrated circuit, a microprocessor, and/or a wireless communication device, such as a cellular telephone.

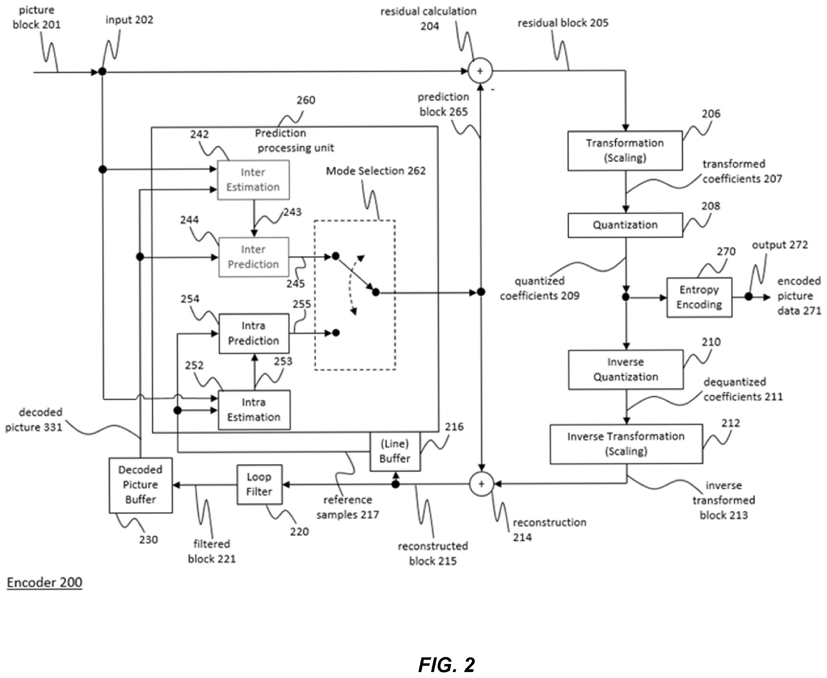

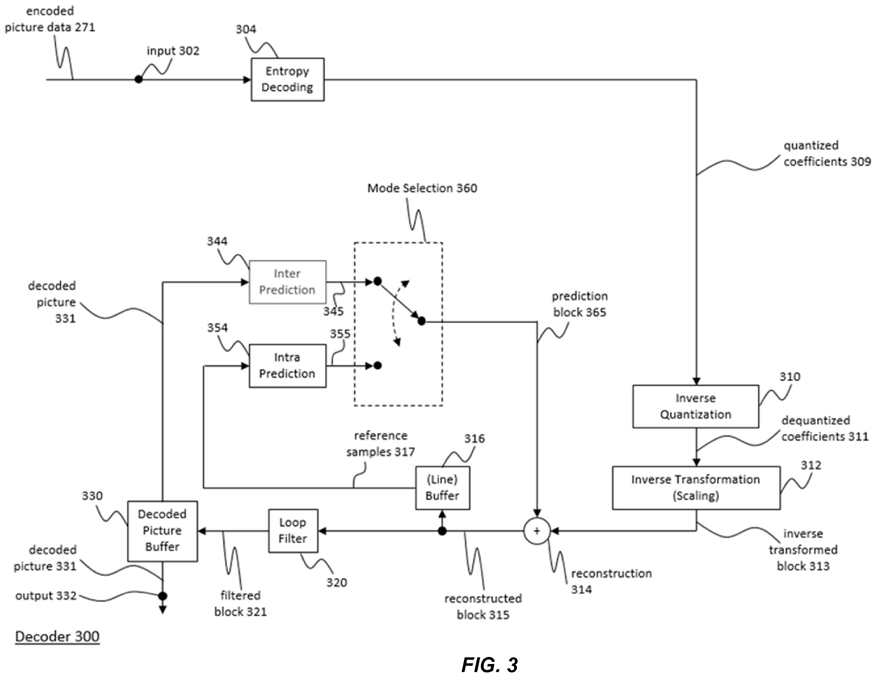

FIG. 1B is a schematic block diagram illustrating an example video coding system 40 including encoder 200 of FIG. 2 and/or decoder 300 of FIG. 3 according to an exemplary embodiment. The system 40 can implement techniques of the present disclosure, e.g., the merge estimation in the inter prediction. In the illustrated implementation, video coding system 40 may include imaging device(s) 41, video encoder 20, video decoder 300 (and/or a video coder implemented via logic circuitry 47 of processing unit(s) 46), an antenna 42, one or more processor(s) 43, one or more memory store(s) 44, and/or a display device 45.

As illustrated, imaging device(s) 41, antenna 42, processing unit(s) 46, logic circuitry 47, video encoder 20, video decoder 30, processor(s) 43, memory store(s) 44, and/or display device 45 may be capable of communication with one another. As discussed, although illustrated with both video encoder 20 and video decoder 30, video coding system 40 may include only video encoder 20 or only video decoder 30 in various practical scenario.

As shown, in some examples, video coding system 40 may include antenna 42. Antenna 42 may be configured to transmit or receive an encoded bitstream of video data, for example. Further, in some examples, video coding system 40 may include display device 45. Display device 45 may be configured to present video data. As shown, in some examples, logic circuitry 47 may be implemented via processing unit(s) 46. Processing unit(s) 46 may include application-specific integrated circuit (ASIC) logic, graphics processor(s), general purpose processor(s), or the like. Video coding system 40 also may include optional processor(s) 43, which may similarly include application-specific integrated circuit (ASIC) logic, graphics processor(s), general purpose processor(s), or the like. In some examples, logic circuitry 54 may be implemented via hardware, video coding dedicated hardware, or the like, and processor(s) 43 may implemented general purpose software, operating systems, or the like. In addition, memory store(s) 44 may be any type of memory such as volatile memory (e.g., Static Random Access Memory (SRAM), Dynamic Random Access Memory (DRAM), etc.) or non-volatile memory (e.g., flash memory, etc.), and so forth. In a non-limiting example, memory store(s) 44 may be implemented by cache memory. In some examples, logic circuitry 47 may access memory store(s) 44 (for implementation of an image buffer for example). In other examples, logic circuitry 47 and/or processing unit(s) 46 may include memory stores (e.g., cache or the like) for the implementation of an image buffer or the like.

In some examples, video encoder 200 implemented via logic circuitry may include an image buffer (e.g., via either processing unit(s) 46 or memory store(s) 44)) and a graphics processing unit (e.g., via processing unit(s) 46). The graphics processing unit may be communicatively coupled to the image buffer. The graphics processing unit may include video encoder 200 as implemented via logic circuitry 47 to embody the various modules as discussed with respect to FIG. 2 and/or any other encoder system or subsystem described herein. The logic circuitry may be configured to perform the various operations as discussed herein.

Video decoder 300 may be implemented in a similar manner as implemented via logic circuitry 47 to embody the various modules as discussed with respect to decoder 300 of FIG. 3 and/or any other decoder system or subsystem described herein. In some examples, video decoder 300 may be implemented via logic circuitry may include an image buffer (e.g., via either processing unit(s) 46 or memory store(s) 44)) and a graphics processing unit (e.g., via processing unit(s) 46). The graphics processing unit may be communicatively coupled to the image buffer. The graphics processing unit may include video decoder 300 as implemented via logic circuitry 47 to embody the various modules as discussed with respect to FIG. 3 and/or any other decoder system or subsystem described herein.

In some examples, antenna 42 of video coding system 40 may be configured to receive an encoded bitstream of video data. As discussed, the encoded bitstream may include data, indicators, index values, mode selection data, or the like associated with encoding a video frame as discussed herein, such as data associated with the coding partition (e.g., transform coefficients or quantized transform coefficients, optional indicators (as discussed), and/or data defining the coding partition). Video coding system 40 may also include video decoder 300 coupled to antenna 42 and configured to decode the encoded bitstream. The display device 45 configured to present video frames.

FIG. 2 is a block diagram illustrating an example of video encoder 200 that may implement the techniques of the present application. Video encoder 200 may perform intra- and inter-coding of video blocks within video slices. Intra-coding relies on spatial prediction to reduce or remove spatial redundancy in video within a given video frame or picture. Inter-coding relies on temporal prediction to reduce or remove temporal redundancy in video within adjacent frames or pictures of a video sequence. Intra-mode (I mode) may refer to any of several spatial based coding modes. Inter-modes, such as uni-directional prediction (P mode) or bi-prediction (B mode), may refer to any of several temporal-based coding modes.

FIG. 2 shows a schematic/conceptual block diagram of an example video encoder 200 that is configured to implement the techniques of the present disclosure. In the example of Fig. 2, the video encoder 200 comprises a residual calculation unit 204, a transform processing unit 206, a quantization unit 208, an inverse quantization unit 210, and inverse transform processing unit 212, a reconstruction unit 214, a buffer 216, a loop filter unit 220, a decoded picture buffer (DPB) 230, a prediction processing unit 260 and an entropy encoding unit 270. The prediction processing unit 260 may include an inter estimation 242, inter prediction unit 244, an intra estimation 252, an intra prediction unit 254 and a mode selection unit 262. Inter prediction unit 244 may further include a motion compensation unit (not shown). Video encoder 200 as shown in Fig. 2 may also be referred to as hybrid video encoder or a video encoder according to a hybrid video codec.

For example, the residual calculation unit 204, the transform processing unit 206, the quantization unit 208, the prediction processing unit 260 and the entropy encoding unit 270 form a forward signal path of the encoder 200, whereas, for example, the inverse quantization unit 210, the inverse transform processing unit 212, the reconstruction unit 214, the buffer 216, the loop filter 220, the decoded picture buffer (DPB) 230, prediction processing unit 260 form a backward signal path of the encoder, wherein the backward signal path of the encoder corresponds to the signal path of the decoder (see decoder 300 in Fig. 3).

The encoder 200 is configured to receive, e.g., by input 202, a picture 201 or a block 203 of the picture 201, e.g. picture of a sequence of pictures forming a video or video sequence. The picture block 203 may also be referred to as current picture block or picture block to be coded, and the picture 201 as current picture or picture to be coded (in particular in video coding to distinguish the current picture from other pictures, e.g. previously encoded and/or decoded pictures of the same video sequence, i.e., the video sequence which also comprises the current picture).

PARTITIONING

Embodiments of the encoder 200 may comprise a partitioning unit (not depicted in FIG. 2) configured to partition the picture 201 into a plurality of blocks, e.g. blocks like block 203, typically into a plurality of nonoverlapping blocks. The partitioning unit may be configured to use the same block size for all pictures of a video sequence and the corresponding grid defining the block size, or to change the block size between pictures or subsets or groups of pictures, and partition each picture into the corresponding blocks.

In HEVC and other video coding specifications, to generate an encoded representation of a picture, a set of coding tree units (CTUs) may be generated. Each of the CTUs may comprise a coding tree block of luma samples, two corresponding coding tree blocks of chroma samples, and syntax structures used to code the samples of the coding tree blocks. In monochrome pictures or pictures having three separate color planes, a CTU may comprise a single coding tree block and syntax structures used to code the samples of the coding tree block. A coding tree block may be an $N \times N$ block of samples. A CTU may also be referred to as a "tree block" or a "largest coding unit" (LCU). The CTUs of HEVC may be broadly analogous to the macroblocks of other standards, such as H.264/AVC. However, a CTU is not necessarily limited to a particular size and may include one or more coding units (CUs). A slice may include an integer number of CTUs ordered consecutively in a raster scan order.

In HEVC, a CTU is split into CUs by using a quad-tree structure denoted as coding tree to adapt to various local characteristics. The decision whether to code a picture area using inter-picture (temporal) or intra-picture (spatial) prediction is made at the CU level. A CU may comprise a coding block of luma samples and two corresponding coding blocks of chroma samples of a picture that has a luma sample array, a Cb sample array, and a Cr sample array, and syntax structures used to code the samples of the coding blocks. In monochrome pictures or pictures having three separate color planes, a CU may comprise a single coding block and syntax structures used to code the samples of the coding block. A coding block is an $N \times N$ block of samples. In some examples, a CU may be the same size of a CTU. Each CU is coded with one coding mode, which could be, e.g., an intra coding mode or an inter coding mode. Other coding modes are also possible. Encoder 200 receives video data. Encoder 200 may encode each CTU in a slice of a picture of the video data. As part of encoding a CTU, prediction processing unit 260 or another processing unit (including but not limited to unit of encoder 200 shown in figure 2) of encoder 200 may perform partitioning to divide the CTBs of the CTU into progressively-smaller blocks 203. The smaller blocks may be coding blocks of CUs.

Syntax data within a bitstream may also define a size for the CTU. A slice includes a number of consecutive CTUs in coding order. A video frame or image or picture may be partitioned into one or more slices. As mentioned above, each tree block may be split into coding units (CUs) according to a quad-tree. In general, a quad-tree data structure includes one node per CU, with a root node corresponding to the treeblock (e.g., CTU). If a CU is split into four sub-CUs, the node corresponding to the CU includes four child nodes, each of which corresponds to one of the sub-CUs. The plurality of nodes in a quad-tree structure includes leaf nodes and non-leaf nodes. The leaf nodes have no child nodes in the tree structure (i.e., the leaf nodes are not further split). The non-leaf nodes include a root node of the tree structure. For each respective non-root node of the plurality of nodes, the respective non-root node corresponds to a sub-CU of a CU corresponding to a parent node in the tree structure of the respective non-root node. Each respective non-leaf node has one or more child nodes in the tree structure.

Each node of the quad-tree data structure may provide syntax data for the corresponding CU. For example, a node in the quad-tree may include a split flag, indicating whether the CU corresponding to the node is split into sub-CUs. Syntax elements for a CU may be defined recursively, and may depend on whether the CU is split into sub-CUs. If a CU is not split further, it is referred to as a leaf-CU. If a block of CU is split further, it may be generally referred to as a non-leaf-CU. Each level of partitioning is a quad-tree split into four sub-CUs. The black CU is an example of a leaf-node (i.e., a block that is not further split).

A CU has a similar purpose as a macroblock of the H.264 standard, except that a CU does not have a size distinction. For example, a tree block may be split into four child nodes (also referred to as sub-CUs), and each child node may in turn be a parent node and be split into another four child nodes. A final, unsplit child node, referred to as a leaf node of the quadtree, comprises a coding node, also referred to as a leaf-CU. Syntax data associated with a coded bitstream may define a maximum number of times a tree block may be split, referred to as a maximum CU depth, and may also define a minimum size of the coding nodes. Accordingly, a bitstream may also define a smallest coding unit (SCU). The term "block" is used to refer to any of a CU, PU, or TU, in the context of HEVC, or similar data structures in the context of other standards (e.g., macroblocks and sub-blocks thereof in H.264/AVC).

In HEVC, each CU can be further split into one, two or four PUs according to the PU splitting type. Inside one PU, the same prediction process is applied and the relevant information is transmitted to the decoder on a PU basis. After obtaining the residual block by applying the prediction process based on the PU splitting type, a CU can be partitioned into transform units (TUs) according to another quad-tree structure similar to the coding tree for the CU. One of key features of the HEVC structure is that it has the multiple partition conceptions including CU, PU, and TU. PUs may be partitioned to be non-square in shape. Syntax data associated with a CU may also describe, for example, partitioning of the CU into one or more PUs. A TU can be square or non-square (e.g., rectangular) in shape, syntax data associated with a CU may describe, for example, partitioning of the CU into one or more TUs according to a quad-tree. Partitioning modes may differ between whether the CU is skip or direct mode encoded, intra-prediction mode encoded, or inter-prediction mode encoded.

While VVC (Versatile Video Coding) removes the separation of the PU and TU concepts, and supports more flexibility for CU partition shapes. A size of the CU corresponds to a size of the coding node and may be square or non-square (e.g., rectangular) in shape. The size of the CU may range from $4 \times 4$ pixels (or $8 \times 8$ pixels) up to the size of the tree block with a maximum of $128 \times 128$ pixels or greater (for example, $256 \times 256$ pixels).

After encoder 200 generates a predictive block (e.g., luma, Cb, and Cr predictive block) for CU, encoder 200 may generate a residual block for the CU. For instance, encoder 100 may generate a luma residual block for the CU. Each sample in the CU's luma residual block indicates a difference between a luma sample in the CU's predictive luma block and a corresponding sample in the CU's original luma coding block. In addition, encoder 200 may generate a Cb residual block for the CU. Each sample in the Cb residual block of a CU may indicate a difference between a Cb sample in the CU's predictive Cb block and a corresponding sample in the CU's original Cb coding block. Encoder 200 may also generate a Cr residual block for the CU. Each sample in the CU's Cr residual block may indicate a difference between a Cr sample in the CU's predictive Cr block and a corresponding sample in the CU's original Cr coding block.

In some examples, encoder 200 skips application of the transforms to the transform block. In such examples, encoder 200 may treat residual sample values in the same way as transform coefficients. Thus, in examples where encoder 200 skips application of the transforms, the following discussion of transform coefficients and coefficient blocks may be applicable to transform blocks of residual samples.

After generating a coefficient block (e.g., a luma coefficient block, a Cb coefficient block or a Cr coefficient block), encoder 200 may quantize the coefficient block to possibly reduce the amount of data used to represent the coefficient block, potentially providing further compression. Quantization generally refers to a process in which a range of values is compressed to a single value. After encoder 200 quantizes a coefficient block, encoder 200 may entropy encode syntax elements indicating the quantized transform coefficients. For example, encoder 200 may perform Context-Adaptive Binary Arithmetic Coding (CABAC) or other entropy coding techniques on the syntax elements indicating the quantized transform coefficients.

Encoder 200 may output a bitstream of encoded picture data 271 that includes a sequence of bits that forms a representation of coded pictures and associated data. Thus, the bitstream comprises an encoded representation of video data.

In J. An et al., "Block partitioning structure for next generation video coding", International Telecommunication Union, COM16-C966, September 2015 (hereinafter, "VCEG proposal COM16-C966"), quad-tree-binary-tree (QTBT) partitioning techniques were proposed for future video coding standard beyond HEVC. Simulations have shown that the proposed QTBT structure is more efficient than the quad-tree structure used in HEVC. In HEVC, inter prediction for small blocks is restricted to reduce the memory access of motion compensation, such that bi-prediction is not supported for $4 \times 8$ and $8 \times 4$ blocks, and inter prediction is not supported for $4 \times 4$ blocks. In the QTBT of the JEM, these restrictions are removed.

In the QTBT, a CU can have either a square or rectangular shape. For example, a coding tree unit (CTU) is first partitioned by a quadtree structure. The quadtree leaf nodes can be further partitioned by a binary tree structure. There are two splitting types, symmetric horizontal splitting and symmetric vertical splitting, in the binary tree splitting. In each case, a node is split by dividing the node down the middle, either horizontally or vertically. The binary tree leaf nodes are called coding units (CUs), and that segmentation is used for prediction and transform processing without any further partitioning. This means that the CU, PU and TU have the same block size in the QTBT coding block structure. A CU sometimes consists of coding blocks (CBs) of different color components, e.g. one CU contains one luma CB and two chroma CBs in the case of P and B slices of the 4:2:0 chroma format and sometimes consists of a CB of a single component, e.g., one CU contains only one luma CB or just two chroma CBs in the case of I slices.

The following parameters are defined for the QTBT partitioning scheme.

- CTU size: the root node size of a quadtree, the same concept as in HEVC.

- MinQTSize: the minimum allowed quadtree leaf node size.

- MaxBTSize: the maximum allowed binary tree root node size.

- MaxBTDepth: the maximum allowed binary tree depth.

- MinBTSize: the minimum allowed binary tree leaf node size.

In one example of the QTBT partitioning structure, the CTU size is set as 128×128 luma samples with two corresponding 64×64 blocks of chroma samples, the MinQTSize is set as 16×16, the MaxBTSize is set as 64×64, the MinBTSize (for both width and height) is set as 4×4, and the MaxBTDepth is set as 4. The quadtree partitioning is applied to the CTU first to generate quadtree leaf nodes. The quadtree leaf nodes may have a size from 16×16 (i.e., the MinQTSize) to 128×128 (i.e., the CTU size). When the quadtree node has size equal to MinQTSize, no further quadtree is considered. If the leaf quadtree node is 128×128, it will not be further split by the binary tree since the size exceeds the MaxBTSize (i.e., 64×64). Otherwise, the leaf quadtree node could be further partitioned by the binary tree. Therefore, the quadtree leaf node is also the root node for the binary tree and it has the binary tree depth as 0. When the binary tree depth reaches MaxBTDepth (i.e., 4), no further splitting is considered. When the binary tree node has width equal to MinBTSize (i.e., 4), no further horizontal splitting is considered. Similarly, when the binary tree node has height equal to MinBTSize, no further vertical splitting is considered. The leaf nodes of the binary tree are further processed by prediction and transform processing without any further partitioning. In the JEM, the maximum CTU size is 256×256 luma samples. The leaf nodes of the binary-tree (CUs) may be further processed (e.g., by performing a prediction process and a transform process) without any further partitioning.

In addition, the QTBT scheme supports the ability for the luma and chroma to have a separate QTBT structure. Currently, for P and B slices, the luma and chroma CTBs in one CTU may share the same QTBT structure. However, for I slices, the luma CTB is partitioned into CUs by a QTBT structure, and the chroma CTBs may be partitioned into chroma CUs by another QTBT structure. This means that a CU in an I slice consists of a coding block of the luma component or coding blocks of two chroma components, and a CU in a P or B slice consists of coding blocks of all three colour components.

The encoder 200 applies a rate-distortion optimization (RDO) process for the QTBT structure to determine the block partitioning.

In addition, a block partitioning structure named multi-type-tree (MTT) is proposed in U.S. Patent Application Publication No. 20170208336 to replace QT, BT, and/or QTBT based CU structures. The MTT partitioning structure is still a recursive tree structure. In MTT, multiple different partition structures (e.g., three or more) are used. For example, according to the MTT techniques, three or more different partition structures may be used for each respective non-leaf node of a tree structure, at each depth of the tree structure. The depth of a node in a tree structure may refer to the length of the path (e.g., the number of splits) from the node to the root of the tree structure. A partition structure may generally refer to how many different blocks a block may be divided into. A partition structure may be a quad-tree partitioning structure which may divide a block into four blocks, a binary-tree partitioning structure which may divide a block into two blocks, or a triple-tree partitioning structure which may divide a block into three blocks, furthermore, triple-tree partitioning structure which may be without dividing the block through the center. A partition structure may have multiple different partition types. A partition type may additionally define how a block is divided, including symmetric or asymmetric partitioning, uniform or non-uniform partitioning, and/or horizontal or vertical partitioning.

In MTT, at each depth of the tree structure, encoder 200 may be configured to further split sub-trees using a particular partition type from among one of three more partitioning structures. For example, encoder 100 may be configured to determine a particular partition type from QT, BT, triple-tree (TT) and other partitioning structures. In one example, the QT partitioning structure may include square quad-tree or rectangular quad-tree partitioning types. Encoder 200 may partition a square block using square quad-tree partitioning by dividing the block, down the center both horizontally and vertically, into four equal-sized square blocks. Likewise, encoder 200 may partition a rectangular (e.g., non-square) block using rectangular quad-tree partition by dividing the rectangular block, down the center both horizontally and vertically, into four equal-sized rectangular blocs.

The BT partitioning structure may include at least one of horizontal symmetric binary-tree, vertical symmetric binary-tree, horizontal non-symmetric binary-tree, or vertical non-symmetric binary-tree partition types. For the horizontal symmetric binary-tree partition type, encoder 200 may be configured to split a block, down the center of the block horizontally, into two symmetric blocks of the same size. For the vertical symmetric binary-tree partition type, encoder 200 may be configured to split a block, down the center of the block vertically, into two symmetric blocks of the same size. For the horizontal non-symmetric binary-tree partition type, encoder 200 may be configured to split a block, horizontally, into two blocks of differing size. For example, one block may be 1/4 the size of the parent block and the other block may be 3/4 the size of the parent blocks, similar to the PART_2N×nU or PART_2N×nD partition type. For the vertical non-symmetric binary-tree partition type, encoder 200 may be configured to split a block, vertically, into two blocks of differing size. For example, one block may be 1/4 the size of the parent block and the other block may be 3/4 the size of the parent blocks, similar to the PART_nL×2N or PART_nR×2N partition type. In other examples, an asymmetric binary-tree partition type may divide a parent block into different size fractions. For example, one sub-block may be 3/8 of the parent block and the other sub-block may be 5/8 of the parent block. Of course, such a partition type may be either vertical or horizontal.

The TT partition structure differs from that of the QT or BT structures, in that the TT partition structure does not split a block down the center. The center region of the block remains together in the same sub-block. Different from QT, which produces four blocks, or binary tree, which produces two blocks, splitting according to a TT partition structure produces three blocks. Example partition types according to the TT partition structure include symmetric partition types (both horizontal and vertical), as well as asymmetric partition types (both horizontal and vertical). Furthermore, the symmetric partition types according to the TT partition structure may be uneven/non-uniform or even/uniform. The asymmetric partition types according to the TT partition structure are uneven/non-uniform. In one example, a TT partition structure may include at least one of the following partition types: horizontal even/uniform symmetric triple-tree, vertical even/uniform symmetric triple-tree, horizontal uneven/non-uniform symmetric triple-tree, vertical uneven/non-uniform symmetric triple-tree, horizontal uneven/non-uniform asymmetric triple-tree, or vertical uneven/non-uniform asymmetric triple-tree partition types.

In general, an uneven/non-uniform symmetric triple-tree partition type is a partition type that is symmetric about a center line of the block, but where at least one of the resultant three blocks is not the same size as the other two. One preferred example is where the side blocks are 1/4 the size of the block, and the center block is 1/2 the size of the block. An even/uniform symmetric triple-tree partition type is a partition type that is symmetric about a center line of the block, and the resultant blocks are all the same size. Such a partition is possible if the block height or width, depending on a vertical or horizontal split, is a multiple of 3. An uneven/non-uniform asymmetric triple-tree partition type is a partition type that is not symmetric about a center line of the block, and where at least one of the resultant blocks is not the same size as the other two.

In examples where a block (e.g., at a sub-tree node) is split to a non-symmetric triple-tree partition type, encoder 200 and/or decoder 300 may apply a restriction such that two of the three partitions have the same size. Such a restriction may correspond to a limitation to which encoder 200 must comply when encoding video data. Furthermore, in some examples, encoder 200 and decoder 300 may apply a restriction whereby the sum of the area of two partitions is equal to the area of the remaining partition when splitting according to a non-symmetric triple-tree partition type.

In some examples, encoder 200 may be configured to select from among all the of the aforementioned partition types for each of the QT, BT, and TT partition structures. In other examples, encoder 200 may be configured to only determine a partition type from among a subset of the aforementioned partition types. For example, a subset of the above-discussed partition types (or other partition types) may be used for certain block sizes or for certain depths of a quadtree structure. The subset of supported partition types may be signaled in the bitstream for use by decoder 200 or may be predefined such that encoder 200 and decoder 300 may determine the subsets without any signaling.

In other examples, the number of supported partitioning types may be fixed for all depths in all CTUs. That is, encoder 200 and decoder 300 may be preconfigured to use the same number of partitioning types for any depth of a CTU. In other examples, the number of supported partitioning types may vary and may be dependent on depth, slice type, or other previously coded information. In one example, at depth 0 or depth 1 of the tree structure, only the QT partition structure is used. At depths greater than 1, each of the QT, BT, and TT partition structures may be used.

In some examples, encoder 200 and/or decoder 300 may apply preconfigured constraints on supported partitioning types in order to avoid duplicated partitioning for a certain region of a video picture or region of a CTU. In one example, when a block is split with non-symmetric partition type, encoder 200 and/or decoder 300 may be configured to not further split the largest sub-block that is split from the current block. For example, when a square block is split according to a non-symmetric partition type (similar to the PART_2N×nU partition type), the largest sub-block among all sub-blocks (similar to the largest sub-block of PART_2N×nU partition type) is the noted leaf node and cannot be further split. However, the smaller sub-block (similar to the smaller sub-block of PART_2N×nU partition type) can be further split.

As another example where constraints on supported partitioning types may be applied to avoid duplicated partitioning for a certain region, when a block is split with non-symmetric partition type, the largest sub-block that is split from the current block cannot be further split in the same direction. For example, when a square block is split non-symmetric partition type (similar to the PART_2N×nU partition type), encoder 200 and/or decoder 300 may be configured to not split the large sub-block among all sub-blocks (similar to the largest sub-block of PART_2N×nU partition type) in the horizontal direction.

As another example where constraints on supported partitioning types may be applied to avoid difficulty in further splitting, encoder 200 and/or decoder 300 may be configured to not split a block, either horizontally or vertically, when the width/height of a block is not a power of 2 (e.g., when the width height is not 2, 4, 8, 16, etc.).

The above examples describe how encoder 200 may be configured to perform MTT partitioning. Decoder 300 may also then apply the same MTT partitioning as was performed by encoder 200. In some examples, how a picture of video data was partitioned by encoder 200 may be determined by applying the same set of predefined rules at decoder 300. However, in many situations, encoder 200 may determine a particular partition structure and partition type to use based on rate-distortion criteria for the particular picture of video data being coded. As such, in order for decoder 300 to determine the partitioning for a particular picture, encoder 200 may signal syntax elements in the encoded bitstream that indicate how the picture, and CTUs of the picture, are to be partitioned. Decoder 200 may parse such syntax elements and partition the picture and CTUs accordingly.

In one example, the prediction processing unit 260 of video encoder 200 may be configured to perform any combination of the partitioning techniques described above, especially, for the motion estimation, and the details will be described later.

Like the picture 201, the block 203 again is or can be regarded as a two-dimensional array or matrix of samples with intensity values (sample values), although of smaller dimension than the picture 201. In other words, the block 203 may comprise, e.g., one sample array (e.g. a luma array in case of a monochrome picture 201) or three sample arrays (e.g. a luma and two chroma arrays in case of a color picture 201) or any other number and/or kind of arrays depending on the color format applied. The number of samples in horizontal and vertical direction (or axis) of the block 203 define the size of block 203.

Encoder 200 as shown in FIG. 2 is configured to encode the picture 201 block by block, e.g., the encoding and prediction is performed per block 203.

RESIDUAL CALCULATION

The residual calculation unit 204 is configured to calculate a residual block 205 based on the picture block 203 and a prediction block 265 (further details about the prediction block 265 are provided later), e.g. by subtracting sample values of the prediction block 265 from sample values of the picture block 203, sample by sample (pixel by pixel) to obtain the residual block 205 in the sample domain.

TRANSFORM

The transform processing unit 206 is configured to apply a transform, e.g. a discrete cosine transform (DCT) or discrete sine transform (DST), on the sample values of the residual block 205 to obtain transform coefficients 207 in a transform domain. The transform coefficients 207 may also be referred to as transform residual coefficients and represent the residual block 205 in the transform domain.

The transform processing unit 206 may be configured to apply integer approximations of DCT/DST, such as the transforms specified for HEVC/H.265. Compared to an orthogonal DCT transform, such integer approximations are typically scaled by a certain factor. In order to preserve the norm of the residual block which is processed by forward and inverse transforms, additional scaling factors are applied as part of the transform process. The scaling factors are typically chosen based on certain constraints like scaling factors being a power of two for shift operation, bit depth of the transform coefficients, tradeoff between accuracy and implementation costs, etc. Specific scaling factors are, for example, specified for the inverse transform, e.g. by inverse transform processing unit 212, at a decoder 300 (and the corresponding inverse transform, e.g. by inverse transform processing unit 212 at an encoder 200 and corresponding scaling factors for the forward transform, e.g. by transform processing unit 206, at an encoder 200 may be specified accordingly.

QUANTIZATION

The quantization unit 208 is configured to quantize the transform coefficients 207 to obtain quantized transform coefficients 209, e.g. by applying scalar quantization or vector quantization. The quantized transform coefficients 209 may also be referred to as quantized residual coefficients 209. The quantization process may reduce the bit depth associated with some or all of the transform coefficients 207. For example, an n-bit transform coefficient may be rounded down to an m-bit transform coefficient during quantization, where n is greater than m. The degree of quantization may be modified by adjusting a quantization parameter (QP). For example for scalar quantization, different scaling may be applied to achieve finer or coarser quantization. Smaller quantization step sizes correspond to finer quantization, whereas larger quantization step sizes correspond to coarser quantization. The applicable quantization step size may be indicated by a quantization parameter (QP). The quantization parameter may for example be an index to a predefined set of applicable quantization step sizes. For example, small quantization parameters may correspond to fine quantization (small quantization step sizes) and large quantization parameters may correspond to coarse quantization (large quantization step sizes) or vice versa. The quantization may include division by a quantization step size and corresponding or inverse dequantization, e.g., by inverse quantization 210, may include multiplication by the quantization step size. Embodiments according to some standards, e.g. HEVC, may be configured to use a quantization parameter to determine the quantization step size. Generally, the quantization step size may be calculated based on a quantization parameter using a fixed point approximation of an equation including division. Additional scaling factors may be introduced for quantization and dequantization to restore the norm of the residual block, which might get modified because of the scaling used in the fixed point approximation of the equation for quantization step size and quantization parameter. In one example implementation, the scaling of the inverse transform and dequantization might be combined. Alternatively, customized quantization tables may be used and signaled from an encoder to a decoder, e.g. in a bitstream. The quantization is a lossy operation, wherein the loss increases with increasing quantization step sizes.

The inverse quantization unit 210 is configured to apply the inverse quantization of the quantization unit 208 on the quantized coefficients to obtain dequantized coefficients 211, e.g. by applying the inverse of the quantization scheme applied by the quantization unit 208 based on or using the same quantization step size as the quantization unit 208. The dequantized coefficients 211 may also be referred to as dequantized residual coefficients 211 and correspond - although typically not identical to the transform coefficients due to the loss by quantization - to the transform coefficients 207.

The inverse transform processing unit 212 is configured to apply the inverse transform of the transform applied by the transform processing unit 206, e.g. an inverse discrete cosine transform (DCT) or inverse discrete sine transform (DST), to obtain an inverse transform block 213 in the sample domain. The inverse transform block 213 may also be referred to as inverse transform dequantized block 213 or inverse transform residual block 213.

The reconstruction unit 214 (e.g., Summer 214) is configured to add the inverse transform block 213 (i.e., reconstructed residual block 213) to the prediction block 265 to obtain a reconstructed block 215 in the sample domain, e.g. by adding the sample values of the reconstructed residual block 213 and the sample values of the prediction block 265.

Optional, the buffer unit 216 (or "buffer" 216), e.g. a line buffer 216, is configured to buffer or store the reconstructed block 215 and the respective sample values, for example for intra prediction. In further embodiments, the encoder may be configured to use unfiltered reconstructed blocks and/or the respective sample values stored in buffer unit 216 for any kind of estimation and/or prediction, e.g. intra prediction.

Embodiments of the encoder 200 may be configured such that, e.g. the buffer unit 216 is not only used for storing the reconstructed blocks 215 for intra prediction 254 but also for the loop filter unit 220 (not shown in FIG. 2), and/or such that, e.g. the buffer unit 216 and the decoded picture buffer unit 230 form one buffer. Further embodiments may be configured to use filtered blocks 221 and/or blocks or samples from the decoded picture buffer 230 (both not shown in Fig. 2) as input or basis for intra prediction 254.

The loop filter unit 220 (or "loop filter" 220), is configured to filter the reconstructed block 215 to obtain a filtered block 221, e.g. to smooth pixel transitions, or otherwise improve the video quality. The loop filter unit 220 is intended to represent one or more loop filters such as a de-blocking filter, a sample-adaptive offset (SAO) filter or other filters, e.g. a bilateral filter or an adaptive loop filter (ALF) or a sharpening or smoothing filters or collaborative filters. Although the loop filter unit 220 is shown in FIG. 2 as being an in loop filter, in other configurations, the loop filter unit 220 may be implemented as a post loop filter. The filtered block 221 may also be referred to as filtered reconstructed block 221. Decoded picture buffer 230 may store the reconstructed coding blocks after the loop filter unit 220 performs the filtering operations on the reconstructed coding blocks.

Embodiments of the encoder 200 (respectively loop filter unit 220) may be configured to output loop filter parameters (such as sample adaptive offset information), e.g., directly or entropy encoded via the entropy encoding unit 270 or any other entropy coding unit, so that, e.g., a decoder 300 may receive and apply the same loop filter parameters for decoding.

The decoded picture buffer (DPB) 230 may be a reference picture memory that stores reference picture data for use in encoding video data by video encoder 20. The DPB 230 may be formed by any of a variety of memory devices, such as dynamic random access memory (DRAM), including synchronous DRAM (SDRAM), magnetoresistive RAM (MRAM), resistive RAM (RRAM), or other types of memory devices. The DPB 230 and the buffer 216 may be provided by the same memory device or separate memory devices. In some example, the decoded picture buffer (DPB) 230 is configured to store the filtered block 221. The decoded picture buffer 230 may be further configured to store other previously filtered blocks, e.g. previously reconstructed and filtered blocks 221, of the same current picture or of different pictures, e.g. previously reconstructed pictures, and may provide complete previously reconstructed, i.e., decoded, pictures (and corresponding reference blocks and samples) and/or a partially reconstructed current picture (and corresponding reference blocks and samples), for example for inter prediction. In some example, if the reconstructed block 215 is reconstructed but without in-loop filtering, the decoded picture buffer (DPB) 230 is configured to store the reconstructed block 215.

The prediction processing unit 260, also referred to as block prediction processing unit 260, is configured to receive or obtain the block 203 (current block 203 of the current picture 201) and reconstructed picture data, e.g. reference samples of the same (current) picture from buffer 216 and/or reference picture data 231 from one or a plurality of previously decoded pictures from decoded picture buffer 230, and to process such data for prediction, i.e., to provide a prediction block 265, which may be an inter-predicted block 245 or an intra-predicted block 255.

Mode selection unit 262 may be configured to select a prediction mode (e.g. an intra or inter prediction mode) and/or a corresponding prediction block 245 or 255 to be used as prediction block 265 for the calculation of the residual block 205 and for the reconstruction of the reconstructed block 215.

Embodiments of the mode selection unit 262 may be configured to select the prediction mode (e.g. from those supported by prediction processing unit 260), which provides the best match or in other words the minimum residual (minimum residual means better compression for transmission or storage), or a minimum signaling overhead (minimum signaling overhead means better compression for transmission or storage), or which considers or balances both. The mode selection unit 262 may be configured to determine the prediction mode based on rate distortion optimization (RDO), i.e., select the prediction mode which provides a minimum rate distortion optimization or which associated rate distortion at least a fulfills a prediction mode selection criterion.

In the following the prediction processing (e.g. prediction processing unit 260 and mode selection (e.g. by mode selection unit 262) performed by an example encoder 200 will be explained in more detail.

As described above, the encoder 200 is configured to determine or select the best or an optimum prediction mode from a set of (pre-determined) prediction modes. The set of prediction modes may comprise, e.g., intra-prediction modes and/or inter-prediction modes.

The set of intra-prediction modes may comprise 35 different intra-prediction modes, e.g. non-directional modes like DC (or mean) mode and planar mode, or directional modes, e.g. as defined in H.265, or may comprise 67 different intra-prediction modes, e.g. non-directional modes like DC (or mean) mode and planar mode, or directional modes, e.g. as defined in H.266 under developing.

The set of (or possible) inter-prediction modes depend on the available reference pictures (i.e., previous at least partially decoded pictures, e.g. stored in DBP 230) and other inter-prediction parameters, e.g. whether the whole reference picture or only a part, e.g. a search window area around the area of the current block, of the reference picture is used for searching for a best matching reference block, and/or e.g. whether pixel interpolation is applied, e.g. half/semi-pel and/or quarter-pel interpolation, or not.

Additional to the above prediction modes, skip mode and/or direct mode may be applied.

The prediction processing unit 260 may be further configured to partition the block 203 into smaller block partitions or sub-blocks, e.g., iteratively using quad-tree-partitioning (QT), binary partitioning (BT) or triple-tree-partitioning (TT) or any combination thereof, and to perform, e.g. the prediction for each of the block partitions or sub-blocks, wherein the mode selection comprises the selection of the tree-structure of the partitioned block 203 and the prediction modes applied to each of the block partitions or sub-blocks.

The inter prediction unit 244 may include motion estimation (ME) unit and motion compensation (MC) unit (not shown in FIG. 2). The motion estimation unit is configured to receive or obtain the picture block 203 (current picture block 203 of the current picture 201) and a decoded picture 331, or at least one or a plurality of previously reconstructed blocks, e.g. reconstructed blocks of one or a plurality of other/different previously decoded pictures 331, for motion estimation. For example, a video sequence may comprise the current picture and the previously decoded picture 331, or in other words, the current picture and the previously decoded picture 331 may be part of or form a sequence of pictures forming a video sequence. The encoder 200 may, e.g., be configured to select a reference block from a plurality of reference blocks of the same or different pictures of the plurality of other pictures and provide a reference picture (or reference picture index, ...) and/or an offset (spatial offset) between the position (x, y coordinates) of the reference block and the position of the current block as inter prediction parameters to the motion estimation unit (not shown in FIG. 2). This offset is also called motion vector (MV). Merging is an important motion estimation tool used in HEVC and inherited to VVC. For performing the merge estimation, the first thing should be done is construct a merge candidate list where each of the candidates contains all motion data including the information whether one or two reference picture lists are used as well as a reference index and a motion vector for each list. The merge candidate list is constructed based on the following candidates: a. up to four spatial merge candidates that are derived from five spatial neighboring (i.e., neighboring) blocks; b. one temporal merge candidate derived from two temporal, co-located blocks; c. additional merge candidates including combined bi-predictive candidates and zero motion vector candidates.

The intra prediction unit 254 is further configured to determine based on intra prediction parameter, e.g. the selected intra prediction mode, the intra prediction block 255. In any case, after selecting an intra prediction mode for a block, the intra prediction unit 254 is also configured to provide intra prediction parameter, i.e., information indicative of the selected intra prediction mode for the block to the entropy encoding unit 270. In one example, the intra prediction unit 254 may be configured to perform any combination of the intra prediction techniques described later.

The entropy encoding unit 270 is configured to apply an entropy encoding algorithm or scheme (e.g., a variable length coding (VLC) scheme, an context adaptive VLC scheme (CALVC), an arithmetic coding scheme, a context adaptive binary arithmetic coding (CABAC), syntax-based context-adaptive binary arithmetic coding (SBAC), probability interval partitioning entropy (PIPE) coding or another entropy encoding methodology or technique) on the quantized residual coefficients 209, inter prediction parameters, intra prediction parameter, and/or loop filter parameters, individually or jointly (or not at all) to obtain encoded picture data 21 which can be output by the output 272, e.g., in the form of an encoded bitstream 21. The encoded bitstream 21 may be transmitted to video decoder 30, or archived for later transmission or retrieval by video decoder 30. The entropy encoding unit 270 can be further configured to entropy encode the other syntax elements for the current video slice being coded.

Other structural variations of the video encoder 200 can be used to encode the video stream. For example, a non-transform based encoder 200 can quantize the residual signal directly without the transform processing unit 206 for certain blocks or frames. In another implementation, an encoder 200 can have the quantization unit 208 and the inverse quantization unit 210 combined into a single unit.

FIG. 3 shows an exemplary video decoder 300 that is configured to implement the techniques of the present disclosure. The video decoder 300 configured to receive encoded picture data (e.g., encoded bitstream) 271, e.g., encoded by encoder 200, to obtain a decoded picture 331. During the decoding process, video decoder 300 receives video data, e.g., an encoded video bitstream that represents picture blocks of an encoded video slice and associated syntax elements, from video encoder 200.

In the example of FIG. 3, the decoder 300 comprises an entropy decoding unit 304, an inverse quantization unit 310, an inverse transform processing unit 312, a reconstruction unit 314 (e.g., a summer 314), a buffer 316, a loop filter 320, a decoded picture buffer 330 and a prediction processing unit 360. The prediction processing unit 360 may include an inter prediction unit 344, an intra prediction unit 354, and a mode selection unit 362. Video decoder 300 may, in some examples, perform a decoding pass generally reciprocal to the encoding pass described with respect to video encoder 200 from FIG. 2.

The entropy decoding unit 304 is configured to perform entropy decoding to the encoded picture data 271 to obtain, e.g., quantized coefficients 309 and/or decoded coding parameters (not shown in FIG. 3), e.g., (decoded) any or all of inter prediction parameters, intra prediction parameter, loop filter parameters, and/or other syntax elements. Entropy decoding unit 304 is further configured to forward inter prediction parameters, intra prediction parameter and/or other syntax elements to the prediction processing unit 360. Video decoder 300 may receive the syntax elements at the video slice level and/or the video block level.

The inverse quantization unit 310 may be identical in function to the inverse quantization unit 110, the inverse transform processing unit 312 may be identical in function to the inverse transform processing unit 112, the reconstruction unit 314 may be identical in function reconstruction unit 114, the buffer 316 may be identical in function to the buffer 116, the loop filter 320 may be identical in function to the loop filter 120 , and the decoded picture buffer 330 may be identical in function to the decoded picture buffer 130.

The prediction processing unit 360 may comprise an inter prediction unit 344 and an intra prediction unit 354, wherein the inter prediction unit 344 may resemble the inter prediction unit 144 in function, and the intra prediction unit 354 may resemble the intra prediction unit 154 in function. The prediction processing unit 360 are typically configured to perform the block prediction and/or obtain the prediction block 365 from the encoded data 21 and to receive or obtain (explicitly or implicitly) the prediction related parameters and/or the information about the selected prediction mode, e.g., from the entropy decoding unit 304.

When the video slice is coded as an intra coded (I) slice, intra prediction unit 354 of prediction processing unit 360 is configured to generate prediction block 365 for a picture block of the current video slice based on a signaled intra prediction mode and data from previously decoded blocks of the current frame or picture. When the video frame is coded as an inter coded (i.e., B, or P) slice, inter prediction unit 344 (e.g., motion compensation unit) of prediction processing unit 360 is configured to produce prediction blocks 365 for a video block of the current video slice based on the motion vectors and other syntax elements received from entropy decoding unit 304. For inter prediction, the prediction blocks may be produced from one of the reference pictures within one of the reference picture lists. Video decoder 300 may construct the reference frame lists, List 0 and List 1, using default construction techniques based on reference pictures stored in DPB 330.

Prediction processing unit 360 is configured to determine prediction information for a video block of the current video slice by parsing the motion vectors and other syntax elements, and uses the prediction information to produce the prediction blocks for the current video block being decoded. For example, the prediction processing unit 360 uses some of the received syntax elements to determine a prediction mode (e.g., intra or inter prediction) used to code the video blocks of the video slice, an inter prediction slice type (e.g., B slice, P slice, or GPB slice), construction information for one or more of the reference picture lists for the slice, motion vectors for each inter encoded video block of the slice, inter prediction status for each inter coded video block of the slice, and other information to decode the video blocks in the current video slice.

Inverse quantization unit 310 is configured to inverse quantize, i.e., de-quantize, the quantized transform coefficients provided in the bitstream and decoded by entropy decoding unit 304. The inverse quantization process may include use of a quantization parameter calculated by video encoder 100 for each video block in the video slice to determine a degree of quantization and, likewise, a degree of inverse quantization that should be applied.

Inverse transform processing unit 312 is configured to apply an inverse transform, e.g., an inverse DCT, an inverse integer transform, or a conceptually similar inverse transform process, to the transform coefficients in order to produce residual blocks in the pixel domain.

The reconstruction unit 314 (e.g., Summer 314) is configured to add the inverse transform block 313 (i.e., reconstructed residual block 313) to the prediction block 365 to obtain a reconstructed block 315 in the sample domain, e.g., by adding the sample values of the reconstructed residual block 313 and the sample values of the prediction block 365.

The loop filter unit 320 (either in the coding loop or after the coding loop) is configured to filter the reconstructed block 315 to obtain a filtered block 321, e.g., to smooth pixel transitions, or otherwise improve the video quality. In one example, the loop filter unit 320 may be configured to perform any combination of the filtering techniques described later. The loop filter unit 320 is intended to represent one or more loop filters such as a de-blocking filter, a sample-adaptive offset (SAO) filter or other filters, e.g., a bilateral filter or an adaptive loop filter (ALF) or a sharpening or smoothing filters or collaborative filters. Although the loop filter unit 320 is shown in FIG. 3 as being an in loop filter, in other configurations, the loop filter unit 320 may be implemented as a post loop filter.

The decoded video blocks 321 in a given frame or picture are then stored in decoded picture buffer 330, which stores reference pictures used for subsequent motion compensation.

The decoder 300 is configured to output the decoded picture 311, e.g., via output 312, for presentation or viewing to a user.

Other variations of the video decoder 300 can be used to decode the compressed bitstream. For example, the decoder 300 can produce the output video stream without the loop filtering unit 320. For example, a non-transform based decoder 300 can inverse-quantize the residual signal directly without the inverse-transform processing unit 312 for certain blocks or frames. In another implementation, the video decoder 300 can have the inverse-quantization unit 310 and the inverse-transform processing unit 312 combined into a single unit.

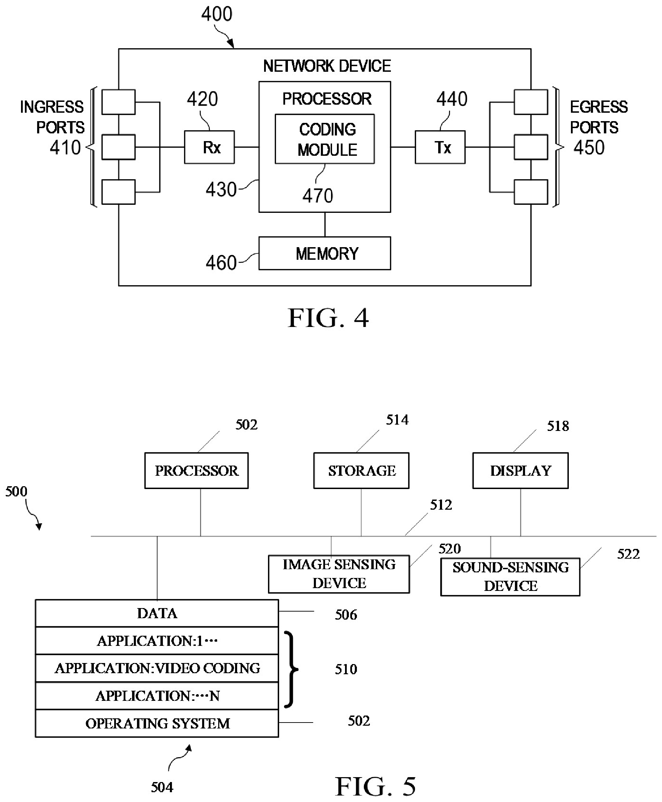

FIG. 4 is a schematic diagram of a network device 400 (e.g., a coding device) according to an embodiment of the disclosure. The network device 400 is suitable for implementing the disclosed embodiments as described herein. In an embodiment, the network device 400 may be a decoder such as video decoder 30 of FIG. 1A or an encoder such as video encoder 20 of FIG. 1A. In an embodiment, the network device 400 may be one or more components of the video decoder 30 of FIG. 1A or the video encoder 20 of FIG. 1A as described above.

The network device 400 comprises ingress ports 410 and receiver units (Rx) 420 for receiving data; a processor, logic unit, or central processing unit (CPU) 430 to process the data; transmitter units (Tx) 440 and egress ports 450 for transmitting the data; and a memory 460 for storing the data. The network device 400 may also comprise optical-to-electrical (OE) components and electrical-to-optical (EO) components coupled to the ingress ports 410, the receiver units 420, the transmitter units 440, and the egress ports 450 for egress or ingress of optical or electrical signals.

The processor 430 is implemented by hardware and software. The processor 430 may be implemented as one or more CPU chips, cores (e.g., as a multi-core processor), FPGAs, ASICs, and DSPs. The processor 430 is in communication with the ingress ports 410, receiver units 420, transmitter units 440, egress ports 450, and memory 460. The processor 430 comprises a coding module 470. The coding module 470 implements the disclosed embodiments described above. For instance, the coding module 470 implements, processes, prepares, or provides the various coding operations. The inclusion of the coding module 470 therefore provides a substantial improvement to the functionality of the network device 400 and effects a transformation of the network device 400 to a different state. Alternatively, the coding module 470 is implemented as instructions stored in the memory 460 and executed by the processor 430.

The memory 460 comprises one or more disks, tape drives, and solid-state drives and may be used as an overflow data storage device, to store programs when such programs are selected for execution, and to store instructions and data that are read during program execution. The memory 460 may be volatile and/or non-volatile memory and may be read-only memory (ROM), random access memory (RAM), ternary content-addressable memory (TCAM), and/or static random-access memory (SRAM).

FIG. 5 is a simplified block diagram of an apparatus 500 that may be used as either or both of the source device 12 and the destination device 14 from FIG. 1A according to an exemplary embodiment. The apparatus 500 can implement techniques of the present disclosure. The apparatus 500 can be in the form of a computing system including multiple computing devices, or in the form of a single computing device, for example, a mobile phone, a tablet computer, a laptop computer, a notebook computer, a desktop computer, and the like.

A processor 502 in the apparatus 500 can be a central processing unit. Alternatively, the processor 502 can be any other type of device, or multiple devices, capable of manipulating or processing information now-existing or hereafter developed. Although the disclosed implementations can be practiced with a single processor as shown, e.g., the processor 502, advantages in speed and efficiency can be achieved using more than one processor.

A memory 504 in the apparatus 500 can be a read only memory (ROM) device or a random access memory (RAM) device in an implementation. Any other suitable type of storage device can be used as the memory 504. The memory 504 can include code and data 506 that is accessed by the processor 502 using a bus 512. The memory 504 can further include an operating system 508 and application programs 510, the application programs 510 including at least one program that permits the processor 502 to perform the methods described here. For example, the application programs 510 can include applications 1 through N, which further include a video coding application that performs the methods described here. The apparatus 500 can also include additional memory in the form of a secondary storage 514, which can, for example, be a memory card used with a mobile computing device. Because the video communication sessions may contain a significant amount of information, they can be stored in whole or in part in the secondary storage 514 and loaded into the memory 504 as needed for processing.

The apparatus 500 can also include one or more output devices, such as a display 518. The display 518 may be, in one example, a touch sensitive display that combines a display with a touch sensitive element that is operable to sense touch inputs. The display 518 can be coupled to the processor 502 via the bus 512. Other output devices that permit a user to program or otherwise use the apparatus 500 can be provided in addition to or as an alternative to the display 518. When the output device is or includes a display, the display can be implemented in various ways, including by a liquid crystal display (LCD), a cathode-ray tube (CRT) display, a plasma display or light emitting diode (LED) display, such as an organic LED (OLED) display.

The apparatus 500 can also include or be in communication with an image-sensing device 520, for example a camera, or any other image-sensing device 520 now existing or hereafter developed that can sense an image such as the image of a user operating the apparatus 500. The image-sensing device 520 can be positioned such that it is directed toward the user operating the apparatus 500. In an example, the position and optical axis of the image-sensing device 520 can be configured such that the field of vision includes an area that is directly adjacent to the display 518 and from which the display 518 is visible.

The apparatus 500 can also include or be in communication with a sound-sensing device 522, for example a microphone, or any other sound-sensing device now existing or hereafter developed that can sense sounds near the apparatus 500. The sound-sensing device 522 can be positioned such that it is directed toward the user operating the apparatus 500 and can be configured to receive sounds, for example, speech or other utterances, made by the user while the user operates the apparatus 500.

Although FIG. 5 depicts the processor 502 and the memory 504 of the apparatus 500 as being integrated into a single unit, other configurations can be utilized. The operations of the processor 502 can be distributed across multiple machines (each machine having one or more of processors) that can be coupled directly or across a local area or other network. The memory 504 can be distributed across multiple machines such as a network-based memory or memory in multiple machines performing the operations of the apparatus 500. Although depicted here as a single bus, the bus 512 of the apparatus 500 can be composed of multiple buses. Further, the secondary storage 514 can be directly coupled to the other components of the apparatus 500 or can be accessed via a network and can comprise a single integrated unit such as a memory card or multiple units such as multiple memory cards. The apparatus 500 can thus be implemented in a wide variety of configurations.

In one or more examples, the functions described may be implemented in hardware, software, firmware, or any combination thereof. If implemented in software, the functions may be stored on or transmitted over as one or more instructions or code on a computer-readable medium and executed by a hardware-based processing unit. Computer-readable media may include computer-readable storage media, which corresponds to a tangible medium such as data storage media, or communication media including any medium that facilitates transfer of a computer program from one place to another, e.g., according to a communication protocol. In this manner, computer-readable media generally may correspond to (1) tangible computer-readable storage media which is non-transitory or (2) a communication medium such as a signal or carrier wave. Data storage media may be any available media that can be accessed by one or more computers or one or more processors to retrieve instructions, code and/or data structures for implementation of the techniques described in this disclosure. A computer program product may include a computer-readable medium.

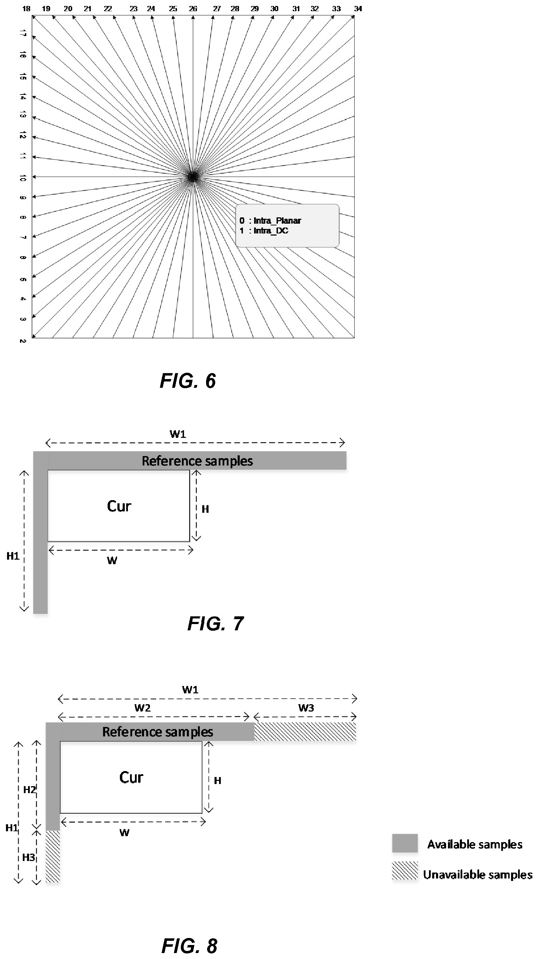

Video compression techniques such as motion compensation, intra prediction and loop filters have been proved to be effective and thus adopted into various video coding standards, such as H.264/AVC and H.265/HEVC. Intra prediction can be used when there is no available reference picture, or when inter predication coding is not used for the current block or picture, for instance in I frame or I slice. The reference samples of intra prediction are usually derived from previously coded (or reconstructed) neighboring blocks in the same picture. For example, both in H.264/AVC and H.265/HEVC, the boundary samples of adjacent blocks are used as reference for intra prediction. In order to cover different texture or structural character, there are many different intra prediction modes. In each mode, a different prediction signal derivation method is used. For example, H.265/HEVC supports a total of 35 intra prediction modes, as shown in FIG. 6.

Intra prediction algorithm description of H.265/HEVC

For intra prediction, the decoded boundary samples of adjacent blocks are used as reference. The encoder selects the best luma intra prediction mode of each block from 35 options: 33 directional prediction modes, a DC mode and a Planar mode. The mapping between the intra prediction direction and the intra prediction mode number is specified in FIG. 6. It should be noted that 65 or even more intra prediction modes are developed in the latest video coding technology, for instance, VVC (versatile video coding), which can capture arbitrary edge directions presented in natural video.

As shown in FIG. 7, the block "CUR" is a current block to be predicted, the gray samples along the boundary of adjacent constructed blocks (left and above the current block) are used as reference samples. The prediction signal can be derived by mapping the reference samples according to a specific method which is indicated by the intra prediction mode.

Referring to FIG. 7, W is the width of the current block, H is the height of the current block. W1 is the number of top reference samples. H1 is the number of left reference samples. Usually, W1>W, and H1>H. which means, top reference samples also include the top-right reference (neighboring) samples, left reference samples also include the left-below reference (neighboring) samples. For example, H1 = 2*H, W1 = 2*W, or H1= H+W, W1 = W+H.

The reference samples are not always available. As shown in FIG. 8, for example, after the availability checking process, W2 samples are available on the top or above the current block, and H2 samples are available at the left of the current block. W3 samples are unavailable on the top, and H3 samples are unavailable at the left.

Those unavailable samples are needed to be substituted (or padded) using the available samples before getting the prediction signal. For example, the unavailable samples are substituted by scanning the reference samples in clockwise direction and using the latest available sample value for the unavailable ones. As for the below part of left reference samples, if they are unavailable, they are substituted by the value of the nearest available reference sample.

**Reference samples availability checking**

The reference samples availability checking means checking whether the reference samples are available. For example, if a reference sample has been reconstructed, then the reference sample is available.

In existing methods, usually, the availability checking process is done by checking luma samples, which means, even for a block of chroma component, the reference samples availability are derived by checking the availability of corresponding luma samples.

In the proposed methods of the present disclosure, for a block, the reference samples availability checking process is performed by checking samples of its own component. Here the component can be Y component, Cb component, or Cr component. According to the proposed methods, for a block, the reference samples availability checking process is performed by checking samples of its corresponding component. Here the component can be Luma component, or Chroma component, which may include both the Cb component and Cr component. Here the Cb component and Cr component are referred to as Chroma component and not distinguished in the availability checking process.

A set of methods are presented in this invention with emphases on the two following aspects.

According to the first aspect of the present disclosure, for a block, the reference samples availability checking process is done by checking samples of its own component. Here the component can be Y component, Cb component, or Cr component.

For a Y block, the availability of a reference sample of the Y block is derived by checking whether the reference sample is available, e.g., by checking whether the reference sample has been reconstructed.

For a Cb block, the availability of a reference sample of the Cb block is derived by checking whether the reference sample is available, e.g., by checking whether the reference sample has been reconstructed.

For a Cr block, the availability of a reference sample of the Cr block is derived by checking whether the reference sample is available, e.g., by checking whether the reference sample has been reconstructed.

According to the second aspect of the present disclosure, for a block, the reference samples availability checking process is performed by checking samples of its corresponding component. Here the component can be Luma component, or Chroma component. Y component is referred to as luma component. Both Cb component and Cr component are referred to as chroma component. Here the Cb component and Cr component are not distinguished in the availability checking process.

For a Luma block, the availability of a reference sample of the Luma block is derived by checking whether the reference sample is available, e.g., by checking whether the reference sample has been reconstructed.

For a Chroma block, the availability of a reference sample of the Chroma block is derived by checking whether the reference sample is available, e.g., by checking whether the reference sample has been reconstructed.

In existing solutions, for a block, the reference samples availability checking process is always done by checking luma samples, regardless which component the block is belong to. In contrast, in the proposed methods of the present disclosure, for blocks belong to different components, their reference samples availability checking process is performed by checking different component samples.

Here note that, the methods proposed in this disclosure are used to derive the availability of reference samples of a block coded as intra prediction mode. The method can be performed by the intra prediction module 254 or 354 shown in FIG. 2 and 3, respectively. Therefore, the method exists at both the decoder side and the encoder side. And, the availability checking process of the reference samples of a block is the same in encoder and decoder.

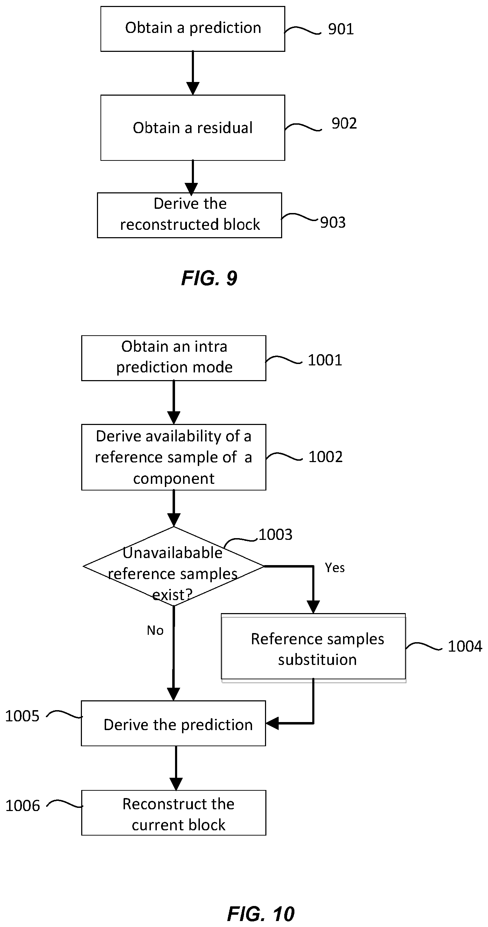

FIG. 9 is a simplified flowchart illustrating a method for deriving a reconstructed signal according to an exemplary embodiment of the present disclosure. Referring to FIG. 9, for a block coded as intra prediction mode, to obtain reconstructed block (or signal, or samples), the method includes firstly obtaining the prediction (or prediction signal or samples) of the block (901). Thereafter, the method includes obtaining a residual (or residual signal) of the block (902). Then the method includes deriving the reconstructed block by adding the residual to the prediction of the current block (903).

FIG. 10 is a simplified flowchart of deriving a prediction (or prediction signal) according to an exemplary embodiment of the present disclosure. Referring to FIG. 10, to obtain the prediction signal, the method firstly includes obtaining the intra prediction mode of a current block, such as Planar mode, or DC mode... (1001). Thereafter, the method includes deriving availability of a reference sample of a component of the current block (1002). In an embodiment, the component includes a Y component, a Cb component or a Cr component. In another embodiment, the component includes a Luma component, or a Chroma component. The method may derive the availability of the reference sample by checking availability of Y samples within a neighboring Y block, wherein the neighboring Y block includes the reference sample, or derive the availability of the reference sample by checking availability of Cb samples within a neighboring Cb block, wherein the neighboring Cb block includes the reference sample; or derive the availability of the reference sample by checking availability of Cr samples within a neighboring Cr block, wherein the neighboring Cr block includes the reference sample.

When the method determines that unavailable reference samples exist (yes in 1003), the method includes substituting or padding the unavailable reference samples by using the available reference samples (1004). Thereafter, the method includes deriving the prediction of the block based on the intra prediction mode and the substituted reference samples (1005). At 1003, when the method determines that no unavailable reference samples exist (no in 1003), the method goes to 1005, which includes deriving the prediction of the current block based on the intra prediction mode and the available reference samples. At 1006, the method includes reconstructing the current block based on the prediction.

Here note that, embodiments of the present disclosure described below are directed to the process of deriving the prediction signal process and improving the reference samples availability checking process.

## Embodiment 1

In this embodiment, the availability checking process is performed by checking samples of its own component.

Referring to FIG. 10, for a block coded as intra prediction mode, to obtain the prediction signal, the method includes:

### Step 1: Obtain intra prediction mode (1001)

The intra prediction mode is obtained by parsing the intra prediction mode related syntax in a bitstream. For example, for a Y block, the intra_luma_mpm_flag, intra_luma_mpm_idx, or intra_luma_mpm_remainder are to be parsed. For a Cb or Cr block, the intra_chroma_pred_mode signal is to be parsed. Thereafter, the intra prediction mode of current block can be derived using the parsed syntax.

### Step 2: Perform the reference samples availability checking process (1002)

This step includes checking the availability of the reference samples of the current block.

In an embodiment, when the block is a Y bock, then the reference samples availability is derived by checking the reference samples of Y component. Alternatively, the reference samples availability is derived by checking the neighboring Y samples, for example, by checking the boundary samples of neighboring Y block.

In an embodiment, when the block is a Cb bock, then the reference samples availability is derived by checking the reference samples of Cb component. Alternatively, the reference samples availability is derived by checking the neighboring Cb samples, for example, by checking the boundary samples of neighboring Cb block.

In an embodiment, when the block is a Cr bock, then the reference samples availability is derived by checking the reference samples of Cr component. Alternatively, the reference samples availability is derived by checking the neighboring Cr samples, for example, by checking the boundary samples of neighboring Cr block.

### Step 3: Determine whether unavailable reference samples exist (1003)

In 1003, the method includes determining whether there are unavailable reference samples. When the method determines that there are unavailable reference samples, the method then go to step 4 (1004), otherwise, the method will go to step 5 (1005).

### Step 4: Reference samples substitution (1004)

Reference samples substitution means deriving the sample value of unavailable reference samples by using the value of available reference samples. In an embodiment, the unavailable samples are substituted by scanning the reference samples in clock-wise direction and using the latest available sample value for the unavailable ones. As for the below part of left reference samples, if they are unavailable, they are substituted by the value of the nearest available reference sample.

### Step 5: Derive the prediction signal (1005)

After obtaining the reference samples and the intra predicting mode, the prediction signal can be derived by mapping the reference samples to the current block, the mapping method is indicated by the intra prediction mode.

After deriving the prediction signal of the current block, the reconstructed signal of the current block can be derived by adding the residual signal to the derived prediction signal (903 of FIG. 9).

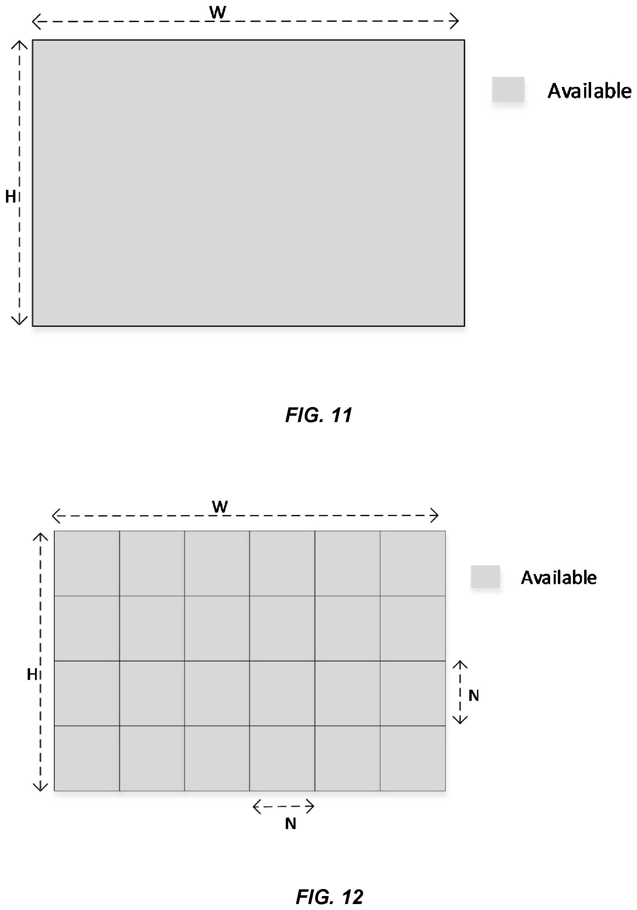

Here note that, after the current block is reconstructed, then the samples in the block area can be marked as "available", as shown in FIG. 11. That is, when a current block is a Y block, then all the Y samples at the positions covered by the block area are available, when a current block is Cb block, then all the Cb samples at the positions covered by the block area are available, when a current block is Cr block, then all the Cr samples at the positions covered by the block area are available.

An example of the specification of those section can be presented like below:

**Reference sample availability marking process**

Inputs to this process are:

- a sample location ( xTbCmp, yTbCmp ) specifying the top-left sample of the current transform block relative to the top-left sample of the current picture,

- a variable refIdx specifying the intra prediction reference line index,

- a variable refW specifying the reference samples width,

- a variable refH specifying the reference samples height,

- a variable cIdx specifying the colour component of the current block.

Outputs of this process are the reference samples refUnfilt[ x ][ y ] with x = -1 - refIdx, y = -1 - refIdx..refH - 1 and x = -refIdx..refW - 1, y = -1 - refIdx for intra sample prediction.

The refW + refH + 1 + ( 2 * refIdx ) neighbouring samples refUnfilt[ x ][ y ] that are constructed samples prior to the in-loop filter process, with x = -1 - refIdx, y = -1 - refIdx..refH - 1 and x = -refIdx..refW - 1, y = -1 - refIdx, are derived as follows:

- The neighbouring location ( xNbCmp, yNbCmp ) is specified by:

$$( \text{xNbCmp}, \text{yNbCmp} ) = ( \text{xTbCmp} + x, \text{yTbCmp} + y ) \qquad (310)$$

- The derivation process for neighbouring block availability as specified in clause 6.4.4 is invoked with the current sample location ( xCurr, yCurr ) set equal to ( xTbCmp, yTbCmp ), the neighbouring sample location ( xNbCmp, yNbCmp ), checkPredModeY set equal to FALSE, and cIdx as inputs, and the output is assigned to availableN.

- Each sample refUnfilt[ x ][ y ] is derived as follows:

    - If availableN is equal to FALSE, the sample refUnfilt[ x ][ y ] is marked as "not available for intra prediction".
    - Otherwise, the sample refUnfilt[ x ][ y ] is marked as "available for intra prediction" and the sample at the location ( xNbCmp, yNbCmp ) is assigned to refUnfilt[ x ][ y ].

**Derivation process for neighbouring block availability**

Inputs to this process are:

- the sample location ( xCurr, yCurr ) of the top-left sample of the current block relative to the top-left sample of the current picture,

- the sample location ( xNbCmp, yNbCmp ) covered by a neighbouring block relative to the top-left luma sample of the current picture,

- the variable checkPredModeY specifying whether availability depends on the prediction mode,

- the variable cIdx specifying the colour component of the current block.

Output of this process is the availability of the neighbouring block covering the location ( xNbCmp, yNbCmp ), denoted as availableN.

The current luma location ( xTbY, yTbY ) and the neighbouring luma location ( xNbY, yNbY ) are derived as follows:

$$( xTbY, yTbY ) = ( cIdx == 0 ) ? ( xCurr, yCurr ) :$$
$$( xCurr * SubWidthC, yCurr * SubHeightC )$$

$$( xNbY, yNbY ) = ( cIdx == 0 ) ? ( xNbCmp, yNbCmp ) :$$
$$( xNbCmp * SubWidthC, yNbCmp * SubHeightC )$$

The neighbouring block availability availableN is derived as follows:

- If one or more of the following conditions are true, availableN is set equal to FALSE:

    - xNbCmp is less than 0.
    - yNbCmp is less than 0.
    - xNbY is greater than or equal to pic_width_in_luma_samples.
    - yNbY is greater than or equal to pic_height_in_luma_samples.
    - IsAvailable[ cIdx ][ xNbCmp ][ yNbCmp ] is equal to FALSE.
    - The neighbouring block is contained in a different slice than the current block.
    - The neighbouring block is contained in a different tile than the current block.
    - entropy_coding_sync_enabled_flag is equal to 1 and ( xNbY >> CtbLog2SizeY ) is greater than or equal to (xTbY >> CtbLog2SizeY ) + 1.

- Otherwise, availableN is set equal to TRUE.

When all of the following conditions are true, availableN is set equal to FALSE:

- checkPredModeY is equal to TRUE.
- availableN is set equal to TRUE.
- CuPredMode[ 0 ][ xNbY ][ yNbY ] is not equal to CuPredMode[ 0 ][ xTbY ][ yTbY ].

IsAvailable[ cIdx ][ x ][ y ] used to store the available informaiton of the samples for each component cIdx, in sample position (x,y).

For cIdx=0, 0<=x<= pic_width_in_luma_samples, 0<=y<= pic_height_in_luma_samples;

For cIdx =1, or 2. 0<=x<= pic_width_in_chroma_samples, 0<=y<= pic_height_in_chroma_samples;

Inputs to this process are:

- a location ( xCurr, yCurr ) specifying the top-left sample of the current block relative to the top-left sample of the current picture component,

- the variables nCurrSw and nCurrSh specifying the width and height, respectively, of the current block,

- a variable cIdx specifying the colour component of the current block,

- an (nCurrSw) x (nCurrSh) array predSamples specifying the predicted samples of the current block,

- an (nCurrSw) x (nCurrSh) array resSamples specifying the residual samples of the current block.

Output of this process is a reconstructed picture sample array recSamples.

Depending on the value of the colour component cIdx, the following assignments are made:

- If cIdx is equal to 0, recSamples corresponds to the reconstructed picture sample array $S_L$.

- Otherwise, if cIdx is equal to 1, tuCbfChroma is set equal to tu_cbf_cb[ xCurr ][ yCurr ], recSamples corresponds to the reconstructed chroma sample array $S_{Cb}$.

- Otherwise (cIdx is equal to 2), tuCbfChroma is set equal to tu_cbf_cr[ xCurr ][ yCurr ], recSamples corresponds to the reconstructed chroma sample array $S_{Cr}$.

Depending on the value of pic_lmcs_enabled _flag, the following applies:

- If pic_lmcs_enabled_flag is equal to 0, the (nCurrSw)x(nCurrSh) block of the reconstructed samples recSamples at location ( xCurr, yCurr ) is derived as follows for i = 0..nCurrSw - 1, j = 0..nCurrSh - 1:

$$recSamples[\ xCurr + i\ ][\ yCurr + j\ ] = Clip1(\ predSamples[\ i\ ][\ j\ ] + resSamples[\ i\ ][\ j\ ]\ ) \qquad (1195)$$

- Otherwise (pic_lmcs_enabled_flag is equal to 1), the following applies:
- If cIdx is equal to 0, the following applies:

  - The picture reconstruction with mapping process for luma samples as specified in clause 8.7.5.2 is invoked with the luma location ( xCurr, yCurr ), the block width nCurrSw and height nCurrSh, the predicted luma sample array predSamples, and the residual luma sample array resSamples as inputs, and the output is the reconstructed luma sample array recSamples.

- Otherwise (cIdx is greater than 0), the picture reconstruction with luma dependent chroma residual scaling process for chroma samples as specified in clause 8.7.5.3 is invoked with the chroma location ( xCurr, yCurr ), the transform block width nCurrSw and height nCurrSh, the coded block flag of the current chroma transform block tuCbfChroma, the predicted chroma sample array predSamples, and the residual chroma sample array resSamples as inputs, and the output is the reconstructed chroma sample array recSamples.

The following assignments are made for i = 0..nCurrSw - 1, j = 0..nCurrSh - 1:

$$xVb = (\ xCurr + i\ )\ \%\ ((\ cIdx == 0\ )\ ?\ IbcBufWidthY\ :\ IbcBufWidthC\ ) \qquad (1196)$$

$$yVb = (\ yCurr + j\ )\ \%\ ((\ cIdx == 0\ )\ ?\ CtbSizeY\ :\ (\ CtbSizeY / subHeightC\ )\ ) \qquad (1197)$$

$$IbcVirBuf[\ cIdx\ ][\ xVb\ ][\ yVb\ ] = recSamples[\ xCurr + i\ ][\ yCurr + j\ ] \qquad (1198)$$

$$IsAvailable[\ cIdx\ ][\ xCurr + i\ ][\ yCurr + j\ ] = TRUE \qquad (1199)$$

Another example of the specification of those section can be presented like below:

Reference sample availability marking process

Inputs to this process are:

- a sample location ( xTbCmp, yTbCmp ) specifying the top-left sample of the current transform block relative to the top-left sample of the current picture,

- a variable refIdx specifying the intra prediction reference line index,

- a variable refW specifying the reference samples width,

- a variable refH specifying the reference samples height,

- a variable cIdx specifying the colour component of the current block.

Outputs of this process are the reference samples refUnfilt[ x ][ y ] with x = -1 - refIdx, y = -1 - refIdx..refH - 1 and x = -refIdx..refW - 1, y = -1 - refIdx for intra sample prediction.
The refW + refH + 1 + ( 2 * refIdx ) neighbouring samples refUnfilt[ x ][ y ] that are constructed samples prior to the in-loop filter process, with x = -1 - refIdx, y = -1 - refIdx..refH - 1 and x = -refIdx..refW - 1, y = -1 - refIdx, are derived as follows:

- The neighbouring location ( xNbCmp, yNbCmp ) is specified by:

$$( xNbCmp, yNbCmp ) = ( xTbCmp + x, yTbCmp + y ) \qquad (310)$$

- The derivation process for neighbouring block availability as specified in clause 6.4.4 is invoked with the current sample location ( xCurr, yCurr ) set equal to ( xTbCmp, yTbCmp ), the neighbouring sample location ( xNbCmp, yNbCmp ), checkPredModeY set equal to FALSE, and cIdx as inputs, and the output is assigned to availableN.

- Each sample refUnfilt[ x ][ y ] is derived as follows:

   - If availableN is equal to FALSE, the sample refUnfilt[ x ][ y ] is marked as "not available for intra prediction".
   - Otherwise, the sample refUnfilt[ x ][ y ] is marked as "available for intra prediction" and the sample at the location ( xNbCmp, yNbCmp ) is assigned to refUnfilt[ x ][ y ].

**Derivation process for neighbouring block availability**

Inputs to this process are:

- the sample location ( xCurr, yCurr ) of the top-left sample of the current block relative to the top-left sample of the current picture,

- the sample location ( xNbCmp, yNbCmp ) covered by a neighbouring block relative to the top-left luma sample of the current picture,

- the variable checkPredModeY specifying whether availability depends on the prediction mode,

- the variable cIdx specifying the colour component of the current block.

Output of this process is the availability of the neighbouring block covering the location ( xNbCmp, yNbCmp ), denoted as availableN.

The current luma location ( xTbY, yTbY ) and the neighbouring luma location ( xNbY, yNbY ) are derived as follows:

$$( xTbY, yTbY ) = ( cIdx == 0 ) ? ( xCurr, yCurr ) : ( xCurr * SubWidthC, yCurr * SubHeightC ) \qquad (XXX)$$

$$( xNbY, yNbY ) = ( cIdx == 0 ) ? ( xNbCmp, yNbCmp ) : ( xNbCmp * SubWidthC, yNbCmp * SubHeightC ) \qquad (XXX)$$

The neighbouring block availability availableN is derived as follows:

- If one or more of the following conditions are true, availableN is set equal to FALSE:

   - xNbCmp is less than 0.
   - yNbCmp is less than 0.
   - xNbY is greater than or equal to pic_width_in_luma_samples.
   - yNbY is greater than or equal to pic_height_in_luma_samples.
   - IsAvailable[ cIdx ][ xNbCmp ][ yNbCmp ] is equal to FALSE.
   - The neighbouring block is contained in a different slice than the current block.
   - The neighbouring block is contained in a different tile than the current block.
   - entropy_coding_sync_enabled_flag is equal to 1 and ( xNbY >> CtbLog2SizeY ) is greater than or equal to (xTbY >> CtbLog2SizeY ) + 1.

- Otherwise, availableN is set equal to TRUE.

When all of the following conditions are true, availableN is set equal to FALSE:

- checkPredModeY is equal to TRUE.
- availableN is set equal to TRUE.
- CuPredMode[ 0 ][ xNbY ][ yNbY ] is not equal to CuPredMode[ 0 ][ xTbY][ yTbY ].

Inputs to this process are:

- a location ( xCurr, yCurr ) specifying the top-left sample of the current block relative to the top-left sample of the current picture component,

- the variables nCurrSw and nCurrSh specifying the width and height, respectively, of the current block,

- a variable cIdx specifying the colour component of the current block,

- an (nCurrSw) x (nCurrSh) array predSamples specifying the predicted samples of the current block,

- an (nCurrSw) x (nCurrSh) array resSamples specifying the residual samples of the current block.

Output of this process is a reconstructed picture sample array recSamples.

Depending on the value of the colour component cIdx, the following assignments are made:

- If cIdx is equal to 0, recSamples corresponds to the reconstructed picture sample array $S_L$.

- Otherwise, if cIdx is equal to 1, tuCbfChroma is set equal to tu_cbf_cb[ xCurr ][ yCurr ], recSamples corresponds to the reconstructed chroma sample array $S_{Cb}$.

- Otherwise (cIdx is equal to 2), tuCbfChroma is set equal to tu_cbf_cr[ xCurr ][ yCurr ], recSamples corresponds to the reconstructed chroma sample array $S_{Cr}$.

Depending on the value of pic_lmcs_enabled_flag, the following applies:

- If pic_lmcs_enabled_flag is equal to 0, the (nCurrSw)x(nCurrSh) block of the reconstructed samples recSamples at location ( xCurr, yCurr ) is derived as follows for i = 0..nCurrSw - 1, j = 0..nCurrSh - 1:

$$\text{recSamples[ xCurr + i ][ yCurr + j ] = Clip1( predSamples[ i ][ j ] + resSamples[ i ][ j ] )} \qquad (1195)$$

- Otherwise (pic_lmcs_enabled_flag is equal to 1), the following applies:

  - If cIdx is equal to 0, the following applies:

    - The picture reconstruction with mapping process for luma samples as specified in clause 8.7.5.2 is invoked with the luma location ( xCurr, yCurr ), the block width nCurrSw and height nCurrSh, the predicted luma sample array predSamples, and the residual luma sample array resSamples as inputs, and the output is the reconstructed luma sample array recSamples.

    - Otherwise (cIdx is greater than 0), the picture reconstruction with luma dependent chroma residual scaling process for chroma samples as specified in clause 8.7.5.3 is invoked with the chroma location ( xCurr, yCurr ), the transform block width nCurrSw and height nCurrSh, the coded block flag of the current chroma transform block tuCbfChroma, the predicted chroma sample array predSamples, and the residual chroma sample array resSamples as inputs, and the output is the reconstructed chroma sample array recSamples.

The following assignments are made for i = 0..nCurrSw - 1, j = 0..nCurrSh - 1:

$$xVb = ( xCurr + i ) \% ( ( cIdx == 0 ) \ ? \ IbcBufWidthY \ : \ IbcBufWidthC ) \qquad (1196)$$

$$yVb = ( yCurr + j ) \% ( ( cIdx == 0 ) \ ? \ CtbSizeY \ : \ ( CtbSizeY / subHeightC ) ) \qquad (1197)$$

$$IbcVirBuf[\ cIdx\ ][\ xVb\ ][\ yVb\ ] = recSamples[\ xCurr + i\ ][\ yCurr + j\ ] \tag{1198}$$

IsAvailable[ cIdx ][ (xCurr + i)\*(( cIdx = = 0) ?1: SubWidthC) ][ (yCurr + j)\*(( cIdx = = 0) ?1: SubHeightC) ] = TRUE (1199)

FIG. 12 is graphic diagram illustrating samples in a current block that are marked as available in unit N x N according to an exemplary embodiment of the present disclosure. In an embodiment, referring to FIG. 12, after the current block is reconstructed, the samples are marked as "available" in a unit with size N\*N, such as N=4, or N=2. Alternatively, for Y component block, N=4, and for Cb/Cr component block, N=2. Any sample in an "available" unit is considered as "available". Which means, if a unit is marked as "available", any samples in the unit area can be marked as "available". That is, when a current unit is a Y unit, then all the Y samples at the positions covered by the unit area are available, when a current unit is a Cb unit, then all the Cb samples at the positions covered by the unit area are available, when a current block is a Cr unit, then all the Cr samples at the positions covered by the unit area are available.

In an embodiment, to check whether a reference sample is available, the process first obtains the position or index of the unit which the sample belong to, when the unit is determined as "available", then the reference sample is considered or marked as available.

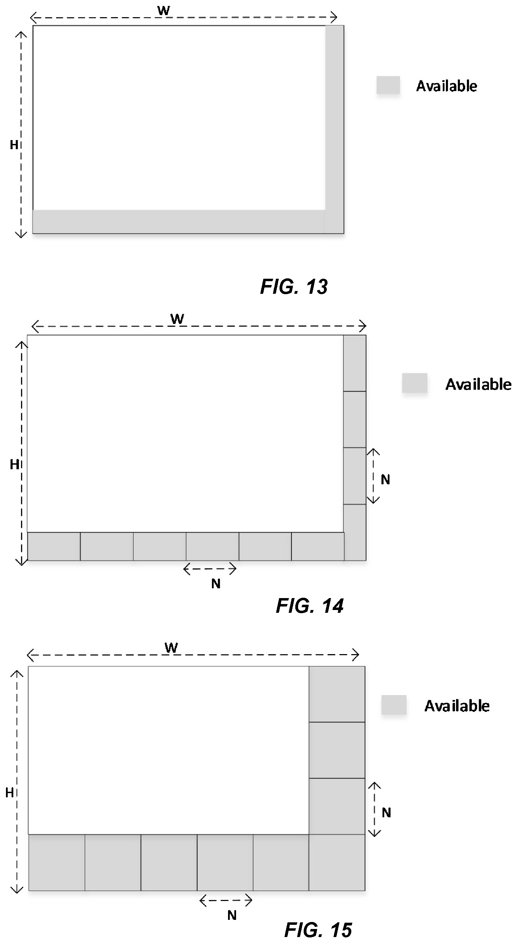

FIG. 13 is a graphic diagram illustrating samples at the right boundary and bottom boundary of a current block that are marked as available according to an exemplary embodiment of the present disclosure. In an embodiment, referring to FIG. 13, after the current block is reconstructed, only the right boundary samples and the bottom boundary samples (which will be used as reference samples of other blocks) are marked as "available".

FIG. 14 is a graphic diagram illustrating samples at the right boundary and bottom boundary of a current block that are marked as available in unit N according to an exemplary embodiment of the present disclosure. In an embodiment, referring to FIG. 14, after the current block is reconstructed, only the right boundary samples and the bottom boundary samples (which will be used as reference samples of other blocks) are marked as "available", and in a unit size with N, such as N=4, or N=2. Alternatively, for a Y component block, N=4, and for Cb/Cr component block, N=2. Any sample in an "available" unit is considered as "available". Which means, if a unit is marked as "available", any samples in the unit area can be marked as "available". In other words, when a current unit is a Y unit, then all the Y samples at the positions covered by the unit area are available, when a current unit is a Cb unit, then all the Cb samples at the positions covered by the unit area are available, and when a current block is a Cr unit, then all the Cr samples at the positions covered by the unit area are available.

To check whether a reference sample is available, in an embodiment, the process first obtains the position or index of the unit which the sample belong to, when the unit is determined as "available", then the reference sample is marked as available.

FIG. 15 is a graphic diagram illustrating samples at the right boundary and bottom boundary of a current block that are marked as available in unit N x N according to an exemplary embodiment of the present disclosure. In an embodiment, referring to FIG. 15, after the current block is reconstructed, only the right boundary samples and the bottom boundary samples (which will be used as reference samples of other blocks) are marked as "available", and in a unit with size N\*N, such as, N=4, or N=2. Alternatively, for a Y component block, N=4, and for a Cb/Cr component block, N=2. Any sample in an "available" unit is considered as "available". Which means, when a unit is marked as "available", any samples in the unit area can be marked as "available". That is, when a current unit is a Y unit, then all the Y samples at the positions covered by the unit area are available, when a current unit is a Cb unit, then all the Cb samples at the positions covered by the unit area are available, when a current block is a Cr unit, then all the Cr samples at the positions covered by the unit area are available.

To check whether a reference sample is available, in an embodiment, the process or method first obtains the position or index of the unit which the sample belong to, when the process or method determines that the unit is "available", then the process marks the reference sample as available.

Here note that, according to embodiments of the present disclosure, the samples or unit "available" information are saved in a memory for each component (3 total components), such as, for the Y component, for the Cb component, and for the Cr component.

Here note that, even when a block is coded as an inter-prediction mode, after the block is reconstructed, the "available" marking method also can be applied.

**Embodiment 2:**

In this embodiment, the availability checking process is performed by checking samples of its corresponding component.

The difference between embodiment 2 and embodiment 1 is the Cb component and Cr component are not distinguished in availability checking process. For a block, the reference samples availability checking process is done by checking samples of its corresponding component. Here the component can be Luma component, or Chroma component. Y component is referred to as luma component. Both Cb component and Cr component are referred to as chroma component.

The difference between embodiment 2 and embodiment 1 only occurs in step 2, while for the other steps, they are the same as those in embodiment 1. Step 2 of embodiment 2 is described in detail below.

Step 2: Perform the reference samples availability checking process which includes checking the availability of the reference samples of current block (1002 in FIG. 10).

In an embodiment, when the block is a Luma bock, then the reference samples availability is derived by checking the reference Luma samples.

In an embodiment, when the block is a Chroma bock, then the reference samples availability is derived by checking the reference Chroma samples.

Referring to FIG. 10, after checking the availability of the reference samples in 1002, the method includes determining whether there are unavailable reference samples in 1003. When the method determines that there are unavailable reference samples (yes in 1003), the method then go to 1004, otherwise, the method will go to 1005.

Here note that, the marking method discussed in embodiment 1 can be extended to embodiment 2 directly, the only difference is for the Chroma component, only after the Cb component block and Cr component block are reconstructed, the chroma samples in the block area can be marked as "available".

For example, for a Luma block, when the block is reconstructed, then the samples in the block area can be marked as "available". For a chroma block, after both Cb and Cr block are reconstructed, then the samples in the block area can be marked as "available". Which means, when a current block is a Luma block, then all the Luma samples at the positions covered by the block area are marked as available. When a current block is a Chroma block, after both Cb and Cr block are reconstructed, then all the Chroma samples at the positions covered by the block area are marked as available.

Other marking methods in embodiment 1 also can be extended similarly.

Here note that, in the embodiments of the present disclosure, the samples or unit "availability" information are saved in a memory for each component (2 total components), such as for the Luma component and for the Chroma component. Which means, Cb component and Cr component will share the same "availability" or "available" information.

Here note that, even a block is coded as an inter-prediction mode, after the block is reconstructed, the "available" marking method also can be applied.

Following is an explanation of the applications of the encoding method as well as the decoding method as shown in the above-mentioned embodiments, and a system using them.

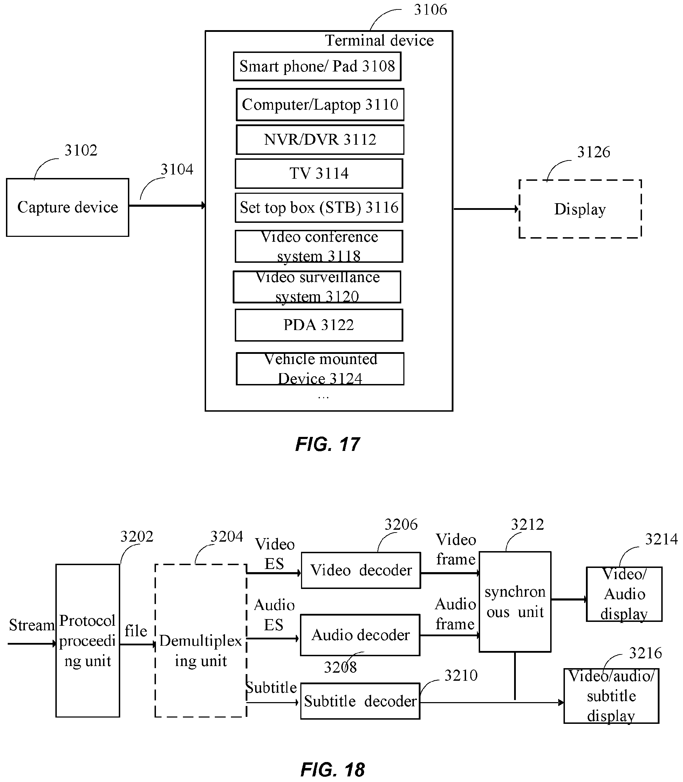

FIG.17 is a block diagram showing a content supply system 3100 for realizing content distribution service. This content supply system 3100 includes capture device 3102, terminal device 3106, and optionally includes display 3126. The capture device 3102 communicates with the terminal device 3106 over communication link 3104. The communication link may include the communication channel 13 described above. The communication link 3104 includes but not limited to WIFI, Ethernet, Cable, wireless (3G/4G/5G), USB, or any kind of combination thereof, or the like.

The capture device 3102 generates data, and may encode the data by the encoding method as shown in the above embodiments. Alternatively, the capture device 3102 may distribute the data to a streaming server (not shown in the Figures), and the server encodes the data and transmits the encoded data to the terminal device 3106. The capture device 3102 includes but not limited to camera, smart phone or Pad, computer or laptop, video conference system, PDA, vehicle mounted device, or a combination of any of them, or the like. For example, the capture device 3102 may include the source device 12 as described above. When the data includes video, the video encoder 20 included in the capture device 3102 may actually perform video encoding processing. When the data includes audio (i.e., voice), an audio encoder included in the capture device 3102 may actually perform audio encoding processing. For some practical scenarios, the capture device 3102 distributes the encoded video and audio data by multiplexing them together. For other practical scenarios, for example in the video conference system, the encoded audio data and the encoded video data are not multiplexed. Capture device 3102 distributes the encoded audio data and the encoded video data to the terminal device 3106 separately.

In the content supply system 3100, the terminal device 310 receives and reproduces the encoded data. The terminal device 3106 could be a device with data receiving and recovering capability, such as smart phone or Pad 3108, computer or laptop 3110, network video recorder (NVR)/ digital video recorder (DVR) 3112, TV 3114, set top box (STB) 3116, video conference system 3118, video surveillance system 3120, personal digital assistant (PDA) 3122, vehicle mounted device 3124, or a combination of any of them, or the like capable of decoding the above-mentioned encoded data. For example, the terminal device 3106 may include the destination device 14 as described above. When the encoded data includes video, the video decoder 30 included in the terminal device is prioritized to perform video decoding. When the encoded data includes audio, an audio decoder included in the terminal device is prioritized to perform audio decoding processing.

For a terminal device with its display, for example, smart phone or Pad 3108, computer or laptop 3110, network video recorder (NVR)/ digital video recorder (DVR) 3112, TV 3114, personal digital assistant (PDA) 3122, or vehicle mounted device 3124, the terminal device can feed the decoded data to its display. For a terminal device equipped with no display, for example, STB 3116, video conference system 3118, or video surveillance system 3120, an external display 3126 is contacted therein to receive and show the decoded data.

When each device in this system performs encoding or decoding, the picture encoding device or the picture decoding device, as shown in the above-mentioned embodiments, can be used.

FIG. 18 is a diagram showing a structure of an example of the terminal device 3106. After the terminal device 3106 receives stream from the capture device 3102, the protocol proceeding unit 3202 analyzes the transmission protocol of the stream. The protocol includes but not limited to Real Time Streaming Protocol (RTSP), Hyper Text Transfer Protocol (HTTP), HTTP Live streaming protocol (HLS), MPEG-DASH, Real-time Transport protocol (RTP), Real Time Messaging Protocol (RTMP), or any kind of combination thereof, or the like.

After the protocol proceeding unit 3202 processes the stream, stream file is generated. The file is outputted to a demultiplexing unit 3204. The demultiplexing unit 3204 can separate the multiplexed data into the encoded audio data and the encoded video data. As described above, for some practical scenarios, for example in the video conference system, the encoded audio data and the encoded video data are not multiplexed. In this situation, the encoded data is transmitted to video decoder 3206 and audio decoder 3208 without through the demultiplexing unit 3204.

Via the demultiplexing processing, video elementary stream (ES), audio ES, and optionally subtitle are generated. The video decoder 3206, which includes the video decoder 30 as explained in the above mentioned embodiments, decodes the video ES by the decoding method as shown in the above-mentioned embodiments to generate video frame, and feeds this data to the synchronous unit 3212. The audio decoder 3208, decodes the audio ES to generate audio frame, and feeds this data to the synchronous unit 3212. Alternatively, the video frame may store in a buffer (not shown in FIG. 18) before feeding it to the synchronous unit 3212. Similarly, the audio frame may store in a buffer (not shown in FIG. 18) before feeding it to the synchronous unit 3212.

The synchronous unit 3212 synchronizes the video frame and the audio frame, and supplies the video/audio to a video/audio display 3214. For example, the synchronous unit 3212 synchronizes the presentation of the video and audio information. Information may code in the syntax using time stamps concerning the presentation of coded audio and visual data and time stamps concerning the delivery of the data stream itself.

If subtitle is included in the stream, the subtitle decoder 3210 decodes the subtitle, and synchronizes it with the video frame and the audio frame, and supplies the video/audio/subtitle to a video/audio/subtitle display 3216.

The present invention is not limited to the above-mentioned system, and either the picture encoding device or the picture decoding device in the above-mentioned embodiments can be incorporated into other system, for example, a car system.

Further embodiments of the present invention are provided in the following. It should be noted that the numbering used in the following section does not necessarily need to comply with the numbering used in the previous sections.

Embodiment 1. An apparatus for image intra prediction, comprising:

a memory storage comprising instructions; and
one or more processors in communication with the memory, wherein the one or more processors execute the instructions to:

obtain an intra prediction mode of a current block;
derive availability of a reference sample of a component of the current block, wherein the component comprises a Cb component, or a Cr component;
substitute unavailable reference samples by using available reference samples;
derive a prediction of the current block based on the intra prediction mode and the substituted reference samples; and reconstruct the current block based on the prediction.

Embodiment 2. The apparatus of embodiment 1, wherein the one or more processors execute the instructions to:

derive the availability of the reference sample by checking availability of Cb samples within a neighboring Cb block, wherein the neighboring Cb block includes the reference sample; or
derive the availability of the reference sample by checking availability of Cr samples within a neighboring Cr block, wherein the neighboring Cr block includes the reference sample.

Embodiment 3. The apparatus of embodiment 1 or 2, wherein all Cb samples in the reconstructed block are marked as available; or all Cr samples in the reconstructed block are marked as available.

Embodiment 4. The apparatus of embodiment 1, wherein the one or more processors execute the instructions to:

derive the prediction of the current block by mapping the substituted reference samples to the current block based on the intra prediction mode;
reconstruct the current block by adding a residual to the prediction of the current block; and mark all samples in the reconstructed block as available after reconstructing the current block.

Embodiment 5. The apparatus of embodiment 4, wherein a block area comprises a number of units each having a unit area, all samples in the unit area are marked as available.

Embodiment 6. The apparatus of embodiment 5, wherein:

when the current unit is a Cb unit, all Cb samples at positions covered by the unit area are marked as available; or
when the current unit is a Cr unit, all Cr samples at positions covered by the unit area are marked as available.

Embodiment 7. The apparatus of any one of embodiments 1-6, wherein availability of reference samples is saved for each component.

Embodiment 8. An apparatus for image intra prediction, comprising:

a memory storage comprising instructions; and
one or more processors in communication with the memory, wherein the one or more processors execute the instructions to:

obtain an intra prediction mode of a current block;
derive availability of a reference sample of a component of the current block, wherein the component comprises a Chroma component;
substitute unavailable reference samples by using available reference samples;
derive a Chroma prediction of the current block based on the intra prediction mode and the substituted reference samples; and
reconstruct the current block based on the prediction.

Embodiment 9. The apparatus of embodiment 8, wherein a Cb component and a Cr component form the chroma component, and the Cb component and the Cr component share a same availability information.

Embodiment 10. The apparatus of embodiment 9, all Chroma samples in the reconstructed block are marked as available.

Embodiment 11. A method for image intra prediction performed by an encoder or a decoder, comprising:

obtaining an intra prediction mode of a current block;
deriving availability of a reference sample of a component of the current block, wherein the component comprises a Cb component, or a Cr component;
substituting unavailable reference samples by using available reference samples;
deriving a prediction of the current block based on the intra prediction mode and the substituted reference samples; and reconstructing the current block based on the prediction.

Embodiment 12. The method of embodiment 11, wherein:

deriving the availability of the reference sample by checking availability of Cb samples within a neighboring Cb block, wherein the neighboring Cb block includes the reference sample; or
derive the availability of the reference sample by checking availability of Cr samples within a neighboring Cr block, wherein the neighboring Cr block includes the reference sample.

Embodiment 13. The method of embodiment 11 or 12, wherein all Cb samples in the reconstructed block are marked as available; or all Cr samples in the reconstructed block are marked as available.

Embodiment 14. The method of embodiment 11, wherein the method further comprising:

deriving the prediction of the current block by mapping the substituted reference samples to the current block based on the intra prediction mode;

reconstructing the current block by adding a residual to the prediction of the current block; and

marking all samples in the reconstructed block as available after reconstructing the current block.

Embodiment 15. The method of embodiment 11, wherein a block area comprises a number of units each having a unit area, all samples in the unit area are marked as available.

Embodiment 16. The method of embodiment 11, wherein:

when the current unit is a Cb unit, all Cb samples at positions covered by the unit area are marked as available; or when the current unit is a Cr unit, all Cr samples at positions covered by the unit area are marked as available.

Embodiment 17. The method of embodiment 11, wherein samples at a right boundary and a bottom boundary of the reconstructed block are marked as available.

Embodiment 18. The method of embodiment 11, wherein only right boundary samples and bottom boundary samples are marked as available in unit N*1 or 1*N.

Embodiment 19. The method of embodiment 11, wherein only right boundary samples and bottom boundary samples are marked as available in unit N*N.

Embodiment 20. The method of any one of embodiments 11-19, wherein availability of reference samples is saved for each component.

Embodiment 21. The method of embodiment 11, wherein the availability reference samples are determined by obtaining positions or indices of units to which the reference samples belong; when a unit is determined as available, then a reference sample associated with that unit is determined as available.

Embodiment 22. A method for image intra prediction performed by an encoder or a decoder, comprising:

obtaining an intra prediction mode of a current block;

deriving availability of a reference sample of a component of the current block, wherein the component comprises a Chroma component;

substituting unavailable reference samples by using available reference samples;

deriving a Chroma prediction of the current block based on the intra prediction mode and the substituted reference samples; and

reconstructing the current block based on the prediction.

Embodiment 23. The method of embodiment 22, wherein a Cb component and a Cr component form the chroma component, and the Cb component and the Cr component share a same availability information.

Embodiment 24. The method of embodiment 22 or 23, wherein all Chroma samples in the reconstructed block are marked as available.

Embodiment 25. The method of embodiment 22, wherein, after reconstruction a unit in the current block, all samples in a unit area of the unit are marked as available.

Embodiment 26. The method of embodiment 22, wherein, after reconstructing the current block, samples at a right boundary and a bottom boundary of the current block are marked as available.

Embodiment 27. The method of embodiment 22, wherein, after reconstructing the current block, only right boundary samples and bottom boundary samples are marked as available in unit N*1 or 1*N.

Embodiment 28. The method of embodiment 22, wherein, after reconstructing the current block, only right boundary samples and bottom boundary samples are marked as available in unit N*N.

Embodiment 29. The method of any one of embodiments 22-28, wherein the deriving availability of the reference sample comprising:
obtaining the position or index of the unit which the sample belong to, if the unit is available, then the reference sample is available.

Embodiment 30. A computer program product comprising a program code for performing the method according to any one of embodiments 11 to 29.

In accordance with the present disclosure, the methods and processes described may be implemented in hardware, software, firmware, or any combination thereof. When implemented in software, the methods or processes may be performed by instructions or program code that are stored in a computer-readable medium and executed by a hardware processing unit.

Since the proposed method store the avaialble information for each sample in each component, it can provide the availabel information more accurately in intra prediction process.

By way of example, and not limitation, a computer-readable storage medium can include RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transitory media, but are instead directed to non-transitory, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

Instructions or program code may be executed by one or more processors, such as one or more digital signal processors (DSPs), general purpose microprocessors, application specific integrated circuits (ASICs), field programmable logic arrays (FPGAs), or other equivalent integrated or discrete logic circuitry. Accordingly, the term "processor," as used herein may refer to any of the foregoing structure or any other structure suitable for implementation of the techniques described herein. In addition, in some aspects, the functionality described herein may be provided within dedicated hardware and/or software modules configured for encoding and decoding, or incorporated in a combined codec. Also, the techniques could be fully implemented in one or more circuits or logic elements.

The techniques of this disclosure may be implemented in a wide variety of devices or apparatuses, including a wireless handset, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a codec hardware unit or provided by a collection of inter-operative hardware units, including one or more processors as described above, in conjunction with suitable software and/or firmware.

The present examples are to be considered as illustrative and not restrictive, and the intention is not to be limited to the details given herein. For example, the various elements or components may be combined or integrated in another system or certain features may be omitted, or not implemented.

In addition, techniques, systems, subsystems, and methods described and illustrated in the various embodiments as discrete or separate may be combined or integrated with other systems, modules, techniques, or methods without departing from the scope of the present disclosure. Other items shown or discussed as coupled or directly coupled or communicating with each other may be indirectly coupled or communicating through some interface, device, or intermediate component whether electrically, mechanically, or otherwise.

**Claims**

1. An apparatus for image intra prediction, comprising:

    a memory comprising instructions; and
    one or more processors in communication with the memory, wherein the one or more processors execute the instructions to:

        derive availability of a reference sample of a luma block by checking whether the reference sample of the luma block is available;
separately derive availability of a reference sample of a chroma block by checking whether the reference sample of the chroma block is available; and

derive a prediction of the luma block based on the availability of the reference sample of the luma block and derive a prediction of the chroma block based on the availability of the reference sample of the chroma block.

2. The apparatus of claim 1, wherein the chroma block comprises chroma components Cb and Cr, the one or more processors execute the instructions to:

derive availability of a reference sample of chroma component Cb by checking whether the reference sample of the chroma component Cb is available; and
separately derive availability of a reference sample of chroma component Cr by checking whether the reference sample of the chroma component Cr is available.

3. The apparatus of claim 1 or 2, wherein the one or more processors execute the instructions to:
separately derive the availability of the reference sample for the chroma block during the derivation process for neighbouring block availability.

4. The apparatus of any one of claims 1-3, wherein the one or more processors execute the instructions to: mark all samples in a unit area as available, wherein a block area comprises a number of units each having a unit area.

5. The apparatus of claim 4, wherein the one or more processors execute the instructions to:

if a current unit is a Cb unit, mark all Cb samples at positions covered by the unit area as available; and
if a current unit is a Cr unit, mark all Cr samples at positions covered by the unit area as available.

6. The apparatus of any one of claims 1-5, wherein the one or more processors execute the instructions to: save the availability of the reference sample for the luma block, and the availability of the reference sample for the chroma block.

7. The apparatus of any one of claims 1-6, wherein the luma block and the chroma block have a separate partitioning structure.

8. A method for image intra prediction performed by an encoder or a decoder, comprising:

deriving availability of a reference sample of a luma block by checking whether the reference sample of the luma block is available;
separately deriving availability of a reference sample of a chroma block by checking whether the reference sample of the chroma block is available; and

deriving a prediction of the luma block based on the availability of the reference sample of the luma block and deriving a prediction of the chroma block based on the availability of the reference sample of the chroma block.

9. The method of claim 8, wherein the chroma block comprises chroma components Cb and Cr, the method further comprises:

deriving availability of a reference sample of chroma component Cb by checking whether the reference sample of the chroma component Cb is available; and
separately deriving availability of a reference sample of chroma component Cr by checking whether the reference sample of the chroma component Cr is available.

10. The method of claim 8 or 9, further comprising: marking all samples in a unit area as available, wherein a block area comprises a number of units each having a unit area.

11. The method of claim 10, further comprising:

if a current unit is a Cb unit, marking all Cb samples at positions covered by the unit area as available; and

if a current unit is a Cr unit, marking all Cr samples at positions covered by the unit area as available.

12. The method of any one of claims 8-11, wherein separately deriving the availability of the reference sample for the chroma block during the derivation process for neighbouring block availability.

13. The method of any one of claims 8-12, further comprising: saving the availability of the reference sample for the luma block, and the availability of the reference sample for the chroma block.

14. The method of any one of claims 8-13, wherein the luma block and the chroma block have a separate partitioning structure.

15. A non-transitory computer-readable recording medium storing a bitstream that is generated by a method for image intra prediction performed by an encoder according to any one of claims 8-14.

10

## SOURCE DEVICE

18 — VIDEO
SOURCE

12

20 — VIDEO
ENCODER

22 — OUTPUT
INTERFACE

16

## DESTINATION DEVICE

DISPLAY
DEVICE — 32

14

VIDEO
DECODER — 30

INPUT
INTERFACE — 28

## FIG. 1A

Imaging
Device(s)
41

Antenna
42

Processing Unit(s) 46

Logic Circuitry 47

Video Encoder
20

Video Decoder
30

Processor(s) 43

Memory
Store(s) 44

Display Device
45

Video Coding System 40

## FIG. 1B

FIG. 2

FIG. 3

400

NETWORK DEVICE

INGRESS PORTS 410

420

Rx

PROCESSOR

CODING MODULE

430

470

440

Tx

EGRESS PORTS 450

460

MEMORY

FIG. 4

502

PROCESSOR

514

STORAGE

518

DISPLAY

500

512

IMAGE SENSING DEVICE

520

SOUND-SENSING DEVICE

522

DATA — 506

APPLICATION:1⋯

APPLICATION:VIDEO CODING

APPLICATION:⋯N

} 510

OPERATING SYSTEM — 502

504

FIG. 5

**FIG. 6**

**FIG. 7**

**FIG. 8**

```
┌─────────────────────────┐
│   Obtain a prediction    │───╮ 901
└─────────────────────────┘
            │
            ▼
┌─────────────────────────┐
│    Obtain a residual     │───╮ 902
└─────────────────────────┘
            │
            ▼
┌─────────────────────────┐
│      Derive the          │
│  reconstructed block     │───╮ 903
└─────────────────────────┘
```

**FIG. 9**

```
┌─────────────────────────┐
│     Obtain an intra      │
│    prediction mode       │───╮ 1001
└─────────────────────────┘
            │
            ▼
┌─────────────────────────┐
│  Derive availability of a│
│  reference sample of  a  │───╮ 1002
│      component           │
└─────────────────────────┘
            │
            ▼
          ╱────────────╲    1003
         ╱ Unavailabable ╲
        ╱ reference samples╲──────────→ Yes
         ╲   exist?       ╱              │
          ╲──────────────╱               ▼
            │                  ┌─────────────────────┐
            No                 │  Reference samples   │───╮ 1004
            │                  │    substituion       │
            ▼                  └─────────────────────┘
  ┌─────────────────────┐               │
1005─│  Derive the prediction │◄─────────┘
  └─────────────────────┘
            │
            ▼
  ┌─────────────────────┐
1006─│   Reconstruct the    │
  │    current block     │
  └─────────────────────┘
```

**FIG. 10**

*FIG. 11*

*FIG. 12*

W

H

Available

**FIG. 13**

W

H

N

N

Available

**FIG. 14**

W

H

N

N

Available

**FIG. 15**

*FIG. 16*

3106

Terminal device

Smart phone/ Pad 3108

Computer/Laptop 3110

NVR/DVR 3112

TV 3114

Set top box (STB) 3116

Video conference system 3118

Video surveillance system 3120

PDA 3122

Vehicle mounted Device 3124

...

3102

Capture device

3104

3126

Display

**FIG. 17**

3202

Stream Protocol proceeding unit

file

3204

Demultiplexing unit

Video ES

3206

Video decoder

Audio ES

Audio decoder

3208

Subtitle

Subtitle decoder

3210

Video frame

Audio frame

3212

synchronous unit

3214

Video/ Audio display

3216

Video/audio/ subtitle display

**FIG. 18**

Europäisches
Patentamt

European
Patent Office

Office européen
des brevets

## EUROPEAN SEARCH REPORT

**Application Number**

EP 26 17 3336

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MA (HUAWEI) X ET AL: "CE3: CCLM/MDLM using simplified coefficients derivation method (Test 5.6.1, 5.6.2 and 5.6.3)", 12. JVET MEETING; 20181003 - 20181012; MACAO; (THE JOINT VIDEO EXPLORATION TEAM OF ISO/IEC JTC1/SC29/WG11 AND ITU-T SG.16 ), , no. JVET-L0340 23 October 2018 (2018-10-23), XP030198588, Retrieved from the Internet: URL:http://phenix.int-evry.fr/jvet/doc_end _user/documents/12_Macao/wg11/JVET-L0340-v 5.zip JVET-K1001-v7_L0136_L0191_L0340_r1.docx [retrieved on 2018-10-23] * paragraphs [8.2.4.2], [8.2.4.2.1] - [8.2.4.2.3], [8.2.4.2.9], [8.3.3.1] * ----- | 1-15 | INV. H04N19/105 H04N19/159 H04N19/186 H04N19/176 H04N19/593 |
| A | MA (HUAWEI) X ET AL: "CE3: CCLM/MDLM using simplified coefficients derivation method (Test 5.6.1, 5.6.2 and 5.6.3)", 12. JVET MEETING; 20181003 - 20181012; MACAO; (THE JOINT VIDEO EXPLORATION TEAM OF ISO/IEC JTC1/SC29/WG11 AND ITU-T SG.16 ), , no. JVET-L0340 23 October 2018 (2018-10-23), XP030198589, Retrieved from the Internet: URL:http://phenix.int-evry.fr/jvet/doc_end _user/documents/12_Macao/wg11/JVET-L0340-v 5.zip JVET-L0340_r1.docx [retrieved on 2018-10-23] * the whole document * ----- -/-- | 1-15 | TECHNICAL FIELDS SEARCHED (IPC) H04N |

The present search report has been drawn up for all claims

| Place of search | Date of completion of the search | Examiner |
|---|---|---|
| Munich | 26 May 2026 | Kuhn, Peter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

Europäisches
Patentamt

European
Patent Office

Office européen
des brevets

## EUROPEAN SEARCH REPORT

**Application Number**

EP 26 17 3336

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | GUILLAUME LAROCHE ET AL: "CE3-5.1 Cross-component linear model simplification", JOINT VIDEO EXPLORATION TEAM OF ISO/IEC JTC1/SC29/WG11 AND ITU-T SG.16, , no. JVET-L0191 12 October 2018 (2018-10-12), pages 1-4, XP030250267, Retrieved from the Internet: URL:http://phenix.int-evry.fr/jvet/doc_end _user/documents/12_Macao/wg11/JVET-L0191-v 2.zip JVET-L0191.docx * the whole document * ----- | 1-15 | |
| A | EP 2 651 137 A2 (LG ELECTRONICS INC [KR]) 16 October 2013 (2013-10-16) * paragraph [0223]; figure 28 * ----- | 1-15 | |
| A | US 2014/185680 A1 (LI XIANG [US] ET AL) 3 July 2014 (2014-07-03) * paragraph [0145] - paragraph [0186] * ----- | 1-15 | TECHNICAL FIELDS SEARCHED (IPC) |

The present search report has been drawn up for all claims

| Place of search | Date of completion of the search | Examiner |
|---|---|---|
| Munich | 26 May 2026 | Kuhn, Peter |

EPO FORM 1503 03.82 (P04C01)

## ANNEX TO THE EUROPEAN SEARCH REPORT
## ON EUROPEAN PATENT APPLICATION NO.

EP 26 17 3336

This annex lists the patent family members relating to the patent documents cited in the above-mentioned European search report.
The members are as contained in the European Patent Office EDP file on
The European Patent Office is in no way liable for these particulars which are merely given for the purpose of information.

26-05-2026

| Patent document cited in search report | | Publication date | Patent family member(s) | | Publication date |
|---|---|---|---|---|---|
| EP 2651137 | A2 | 16-10-2013 | CN | 103339943 A | 02-10-2013 |
| | | | CN | 107181950 A | 19-09-2017 |
| | | | CN | 107197257 A | 22-09-2017 |
| | | | CN | 107257465 A | 17-10-2017 |
| | | | CN | 107277522 A | 20-10-2017 |
| | | | EP | 2651137 A2 | 16-10-2013 |
| | | | KR | 20130126928 A | 21-11-2013 |
| | | | KR | 20180050428 A | 14-05-2018 |
| | | | KR | 20180117219 A | 26-10-2018 |
| | | | KR | 20190115116 A | 10-10-2019 |
| | | | KR | 20200103120 A | 01-09-2020 |
| | | | KR | 20210011516 A | 01-02-2021 |
| | | | KR | 20210108494 A | 02-09-2021 |
| | | | KR | 20220110339 A | 05-08-2022 |
| | | | KR | 20230107723 A | 17-07-2023 |
| | | | KR | 20240128140 A | 23-08-2024 |
| | | | US | 2013272623 A1 | 17-10-2013 |
| | | | US | 2015271503 A1 | 24-09-2015 |
| | | | US | 2017078674 A1 | 16-03-2017 |
| | | | US | 2018054618 A1 | 22-02-2018 |
| | | | US | 2019098318 A1 | 28-03-2019 |
| | | | US | 2019373269 A1 | 05-12-2019 |
| | | | US | 2020213598 A1 | 02-07-2020 |
| | | | US | 2021344933 A1 | 04-11-2021 |
| | | | US | 2023291911 A1 | 14-09-2023 |
| | | | US | 2024283943 A1 | 22-08-2024 |
| | | | US | 2025330615 A1 | 23-10-2025 |
| | | | WO | 2012078001 A2 | 14-06-2012 |
| US 2014185680 | A1 | 03-07-2014 | CN | 105144719 A | 09-12-2015 |
| | | | EP | 2939428 A2 | 04-11-2015 |
| | | | JP | 6231128 B2 | 15-11-2017 |
| | | | JP | 2016506683 A | 03-03-2016 |
| | | | US | 2014185680 A1 | 03-07-2014 |
| | | | WO | 2014105799 A2 | 03-07-2014 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20170208336

**Non-patent literature cited in the description**

- **J. AN et al.** Block partitioning structure for next generation video coding. *International Telecommunication Union, COM16-C966*, September 2015